# EUROPEAN PATENT APPLICATION

(11) **EP 4 804 472 A1**
(43) Date of publication of application: **09.09.2026**
(21) Application number: 25742103.2
(22) Date of filing: 15.01.2025
(51) Int. Cl.: H04L 27/26, H04W 74/00, H04W 84/12

(54) **ELECTRONIC DEVICE AND METHOD FOR IDENTIFYING FREQUENCY OFFSET OF RANDOM ACCESS SIGNAL IN WIRELESS COMMUNICATION SYSTEM**

(30) Priority: 19.01.2024 KR 20240009129; 02.02.2024 KR 20240016946
(71) Applicant: Samsung Electronics Co., Ltd., Suwon-si, Gyeonggi-do 16677 (KR)
(72) Inventor: KIM, Hyuncheol, Suwon-si Gyeonggi-do 16677 (KR); LEE, Jonghyeuk, Suwon-si Gyeonggi-do 16677 (KR)
(74) Representative: Gulde & Partner
(86) International application number: PCT/KR2025/000891
(87) International publication number: WO 2025/155088

(57) **Abstract**

According to an embodiment, a method performed by an electronic device may comprise an operation of acquiring, on the basis of a physical random access channel (PRACH) region, a preamble signal related to signals received via a plurality of antennas. The method may comprise an operation of acquiring delay information for the preamble signal. The method may comprise an operation of acquiring energy information, acquired through a correlation operation, about the preamble signal. The method may comprise an operation of estimating a frequency offset for the preamble signal on the basis of the delay information and the energy information. The method may comprise an operation of compensating for the estimated frequency offset for a received data signal on the basis of a physical uplink shared channel (PUSCH) region.

## Description

### [Technical Field]

The present disclosure relates to a wireless communication system. More specifically, the present disclosure relates to an electronic device and a method for identifying a frequency offset of a random access signal in a wireless communication system.

### [Background Art]

In a wireless communication system, a terminal may transmit a random access signal to a base station to access the base station. The base station may perform a random access process with the terminal based on the random access signal. In the random access signal, in order to support wide cell coverage, a subcarrier spacing equal to or less than a subcarrier spacing used in an uplink channel may be used.

The above-described information may be provided as a related art for the purpose of helping understanding of the present disclosure. No argument or decision is made as to whether any of the above description may be applied as a prior art related to the present disclosure.

### [Disclosure]

### [Technical Solution]

According to an embodiment, an electronic device may comprise a transceiver, at least one processor comprising processing circuitry, and memory, comprising one or more storage mediums, storing instructions. The instructions, when executed by the at least one processor individually or collectively, may cause the electronic device to obtain, based on a physical random access channel (PRACH) region, a preamble signal related to signals received through a plurality of antennas. The instructions, when executed by the at least one processor individually or collectively, may cause the electronic device to obtain delay information on the preamble signal. The instructions, when executed by the at least one processor individually or collectively, may cause the electronic device to obtain energy information on the preamble signal obtained through a correlation operation. The instructions, when executed by the at least one processor individually or collectively, may cause the electronic device to estimate, based on the delay information and the energy information, a frequency offset related to the preamble signal. The instructions, when executed by the at least one processor individually or collectively, may cause the electronic device to compensate the estimated frequency offset for a data signal received based on a physical uplink shared channel (PUSCH) region.

According to an embodiment, a method performed by an electronic device may comprise obtaining, based on a physical random access channel (PRACH) region, a preamble signal related to signals received through a plurality of antennas. The method may comprise obtaining delay information on the preamble signal. The method may comprise obtaining energy information on the preamble signal obtained through a correlation operation. The method may comprise estimating, based on the delay information and the energy information, a frequency offset related to the preamble signal. The method may comprise compensating the estimated frequency offset for a data signal received based on a physical uplink shared channel (PUSCH) region.

According to an embodiment, a non-transitory computer readable storage medium may store one or more programs. The one or more programs may comprise instructions, which, when executed by a processor of an electronic device, cause the electronic device to obtain, based on a physical random access channel (PRACH) region, a preamble signal related to signals received through a plurality of antennas. The one or more programs may comprise instructions, which, when executed by the processor, cause the electronic device to obtain delay information on the preamble signal. The one or more programs may comprise instructions, which, when executed by the processor, cause the electronic device to obtain energy information on the preamble signal obtained through a correlation operation. The one or more programs may comprise instructions, which, when executed by the processor, cause the electronic device to estimate, based on the delay information and the energy information, a frequency offset related to the preamble signal. The one or more programs may comprise instructions, which, when executed by the processor, cause the electronic device to compensate the estimated frequency offset for a data signal received based on a physical uplink shared channel (PUSCH) region.

### [Description of the Drawings]

FIG. 1 illustrates a wireless communication system.
FIG. 2A illustrates a fronthaul interface.
FIG. 2B illustrates a fronthaul interface of an open (O)-radio access network (RAN).
FIG. 3A illustrates a functional configuration of a distributed unit (DU).
FIG. 3B illustrates a functional configuration of a radio unit (RU).
FIG. 4 illustrates an example of a function split between a DU and an RU.
FIG. 5 illustrates an example of a resource structure of a time-frequency domain supported in a wireless communication system.
FIG. 6 illustrates an example of channels in a communication standard.
FIG. 7 illustrates an example of a structure of a random access signal.
FIG. 8 illustrates an example of a PRACH detector.
FIG. 9 illustrates an example of a frequency offset estimator of a PRACH detector.
FIG. 10 illustrates an example of graphs for estimating a frequency offset.
FIG. 11 illustrates a flowchart related to an operation of an electronic device.

### [Mode for Invention]

Terms used in the present disclosure are used only to describe a specific embodiment, and may not be intended to limit a range of another embodiment. A singular expression may include a plural expression unless the context clearly means otherwise. Terms used herein, including a technical or a scientific term, may have the same meaning as those generally understood by a person with ordinary skill in the art described in the present disclosure. Among the terms used in the present disclosure, terms defined in a general dictionary may be interpreted as identical or similar meaning to the contextual meaning of the relevant technology and are not interpreted as ideal or excessively formal meaning unless explicitly defined in the present disclosure. In some cases, even terms defined in the present disclosure may not be interpreted to exclude embodiments of the present disclosure.

In various embodiments of the present disclosure described below, a hardware approach will be described as an example. However, since the various embodiments of the present disclosure include technology that uses both hardware and software, the various embodiments of the present disclosure do not exclude a software-based approach.

A term referring to a signal (e.g., a signal, information, a message, or signaling), a term referring to a resource (e.g., a symbol, a slot, a subframe, a radio frame, a subcarrier, a resource element (RE), a resource block (RB), a bandwidth part (BWP), or an occasion), a term for a computation state (e.g., a step, an operation, or a procedure), a term referring to data (e.g., a packet, a user stream, information, a bit, a symbol, or a codeword), a term referring to a channel, a term referring to network entities, a term referring to a component of a device, and the like used in the following descriptions are exemplified for convenience of description. Therefore, the present disclosure is not limited to terms described below, and another term having an equivalent technical meaning may be used.

In addition, in the present disclosure, the term 'greater than' or 'less than' may be used to determine whether a particular condition is satisfied or fulfilled, but this is only a description to express an example and does not exclude description of 'greater than or equal to' or 'less than or equal to'. A condition described as 'greater than or equal to ' may be replaced with 'greater than', a condition described as 'less than or equal to' may be replaced with 'less than', and a condition described as ' greater than or equal to and less than' may be replaced with 'greater than and less than or equal to'. In addition, hereinafter, 'A' to 'B' refers to at least one of elements from A (including A) to B (including B). Hereinafter, 'C' and/or 'D' means including at least one of 'C' or 'D', that is, {'C', 'D', and 'C' and 'D'}.

Although the present disclosure describes various embodiments using terms used in some communication standards (e.g., 3rd Generation Partnership Project (3GPP), extensible radio access network (xRAN), open-radio access network (O-RAN)), these are only examples for explanation. The various embodiments of the present disclosure may be easily modified and applied to other communication systems.

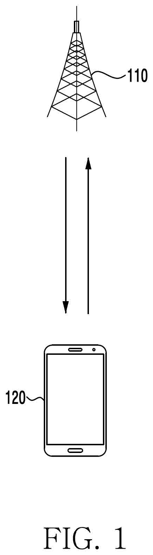

FIG. 1 illustrates a wireless communication system.

Referring to FIG. 1, FIG. 1 illustrates a base station 110 and a terminal 120 as a portion of nodes that utilize a wireless channel in a wireless communication system. FIG. 1 illustrates only one base station, but a wireless communication system may further include another base station that is identical or similar to the base station 110.

The base station 110 is a network infrastructure that provides wireless access to the terminal 120. The base station 110 has coverage defined based on a distance at which a signal may be transmitted. In addition to 'base station', the base station 110 may be referred to as an 'access point (AP)', 'eNodeB (eNB)', '5th generation node', 'next generation nodeB (gNB)', 'wireless point', 'transmission/reception point (TRP)' or other terms having equivalent technical meanings.

The terminal 120, which is a device used by a user, performs communication with the base station 110 through a wireless channel. A link from the base station 110 to the terminal 120 is referred to as a downlink (DL), and a link from the terminal 120 to the base station 110 is referred to as an uplink (UL). In addition, although not illustrated in FIG. 1, the terminal 120 and another terminal may perform communication with each other through a wireless channel. At this time, a link (device-to-device link (D2D)) between the terminal 120 and the other terminal is referred to as a sidelink, and the sidelink may be used interchangeably with a PC5 interface. In some other embodiments, the terminal 120 may be operated without the user's involvement. According to an embodiment, the terminal 120, which is a device performing machine type communication (MTC), may not be carried by the user. Additionally, according to an embodiment, the terminal 120 may be a narrowband (NB)-internet of things (IoT) device.

In addition to 'terminal', the terminal 120 may also be referred to as 'user equipment (UE) ', 'customer premises equipment, (CPE) ', 'mobile station', 'subscriber station', 'remote terminal', 'wireless terminal', 'electronic device', 'user device', or other terms having equivalent technical meanings.

The base station 110 may perform beamforming with the terminal 120. The base station 110 and the terminal 120 may transmit and receive a wireless signal in a relatively low frequency band (e.g., frequency range 1 (FR 1) of NR). In addition, the base station 110 and the terminal 120 may transmit and receive a wireless signal in a relatively high frequency band (e.g., FR 2 (or FR 2-1, FR 2-2, FR 2-3) or FR 3), and a mmWave band (e.g., 28GHz, 30GHz, 38GHz, 60GHz). The base station 110 and the terminal 120 may perform beamforming to improve a channel gain. Herein, the beamforming may include transmission beamforming and reception beamforming. The base station 110 and the terminal 120 may provide directivity to a transmission signal or a reception signal. To this end, the base station 110 and the terminal 120 may select serving beams through a beam search or beam management procedure. After the serving beams are selected, subsequent communication may be performed through a resource in a QCL relationship with the resource transmitting the serving beams.

If large-scale characteristics of a channel carrying a symbol on a first antenna port may be inferred from a channel carrying a symbol on a second antenna port, the first antenna port and the second antenna port may be evaluated to be in the QCL relationship. For example, large-scale characteristics may include at least one of a delay spread, a Doppler spread, a Doppler shift, an average gain, an average delay, and a spatial receiver parameter.

Although FIG. 1 describes that both the base station 110 and the terminal 120 perform beamforming, the embodiments of the present disclosure are not necessarily limited thereto. In some embodiments, the terminal may or may not perform beamforming. In addition, the base station may or may not perform beamforming. That is, either only one of the base station and the terminal may perform beamforming, or neither the base station nor the terminal may perform beamforming.

In the present disclosure, a beam refers to a spatial flow of a signal in a wireless channel, and is formed by one or more antennas (or antenna elements), and this formation process may be referred to as beamforming. Beamforming may include at least one of analog beamforming or digital beamforming (e.g., precoding). A reference signal transmitted based on beamforming may include, for example, a demodulation-reference signal (DM-RS), a channel state information-reference signal (CSI-RS), a synchronization signal/physical broadcast channel (SS/PBCH), and a sounding reference signal (SRS). In addition, an IE such as CSI-RS resource or SRS-resource may be used as a configuration for each reference signal, and this configuration may include information associated with the beam. The information associated with the beam may mean whether a corresponding configuration (e.g., CSI-RS resource) uses the same spatial domain filter as another configuration (e.g., another CSI-RS resource within the same CSI-RS resource set) or a different spatial domain filter, or which reference signal it is quasi-co-located (QCL) with, and if so, what type it is (e.g., QCL type A, B, C, D).

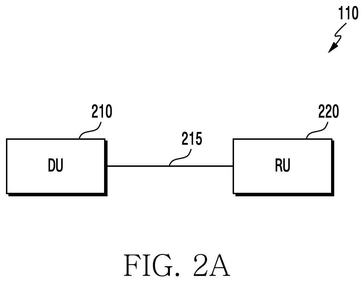

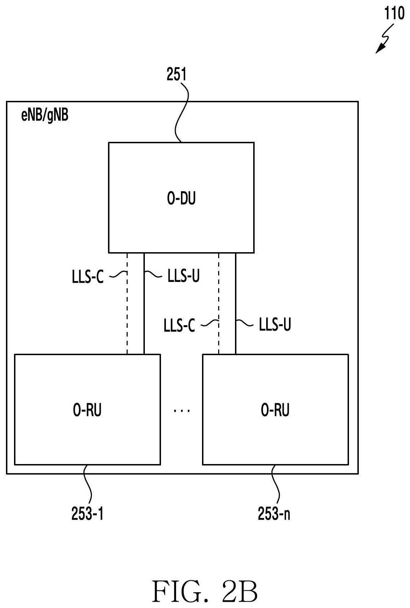

Conventionally, in a communication system with a relatively large cell radius of base station, each base station was installed to include a function of a digital processing unit (or distributed unit (DU)) and a radio frequency (RF) processing unit (or radio unit (RU)). However, as high frequency bands are used in 4th generation (4G) and/or subsequent communication systems (e.g., 5G) and the cell coverage of base stations is reduced, the number of base stations to cover a specific area has increased. The burden of installation cost for operators to install base stations has also increased. In order to minimize the installation cost of a base station, a structure in which the DU and RU of the base station are separated, one or more RUs are connected to one DU through a wired network, and one or more Rus geographically distributed to cover a specific area are deployed, has been proposed. Hereinafter, a deployment structure and expansion examples of a base station according to various embodiments of the present disclosure are described through FIGS. 2A and 2B.

FIG. 2A illustrates a fronthaul interface. Unlike a backhaul between a base station and a core network, the fronthaul refers to a link between entities between a wireless LAN and a base station. FIG. 2A illustrates an example of a fronthaul structure between one DU 210 and one RU 220, but this is only for convenience of explanation and the present disclosure is not limited thereto. In other words, the embodiments of the present disclosure may also be applied to a fronthaul structure between one DU and a plurality of RU. For example, the embodiments of the present disclosure may be applied to a fronthaul structure between one DU and two RU. In addition, the embodiments of the present disclosure may also be applied to a fronthaul structure between one DU and three RU.

Referring to FIG. 2A, the base station 110 may include a DU 210 and an RU 220. A fronthaul 215 between the DU 210 and the RU 220 may be operated via an Fx interface. For operation of the fronthaul 215, an interface such as an enhanced common public radio interface (eCPRI) or radio over ethernet (ROE) may be used.

As communication technology has been developed, mobile data traffic increased, and thus the bandwidth demand required in a fronthaul between a digital unit and a radio unit has increased significantly. In a deployment such as centralized/cloud radio access network (C-RAN), the DU may be implemented to perform functions for packet data convergence protocol (PDCP), radio link control (RLC), media access control (MAC), and physical (PHY), and the RU may be implemented to further perform functions for PHY layer in addition to a radio frequency (RF) function.

The DU 210 may be in charge of upper layer functions of a wireless network. For example, the DU 210 may perform functions of the MAC layer and a part of the PHY layer. Herein, a part of the PHY layer is a function performed at a higher level among the functions of the PHY layer, and may include, for example, channel encoding (or channel decoding), scrambling (or descrambling), modulation (or demodulation), and layer mapping (or layer demapping). According to an embodiment, if the DU 210 complies with an O-RAN standard, it may be referred to as an O-RAN DU (O-DU). The DU 210 may be replaced with and represented as a first network entity for a base station (e.g., gNB) in embodiments of the present disclosure, as needed.

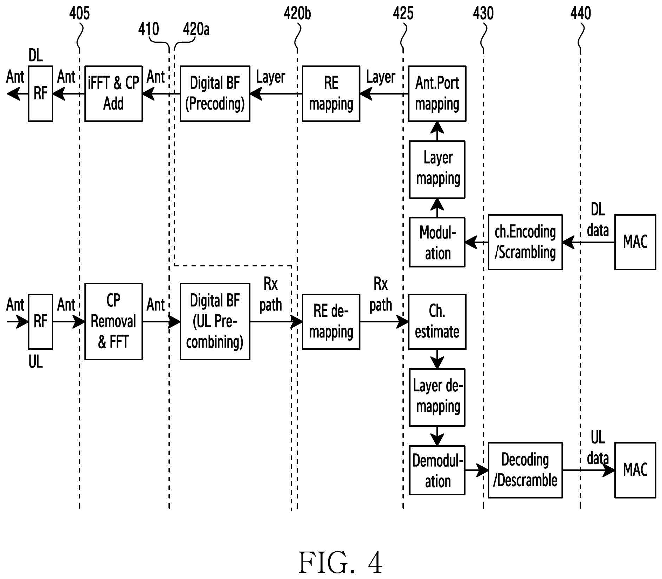

The RU 220 may be in charge of lower layer functions of a wireless network. For example, the RU 220 may perform a part of the PHY layer, and a RF function. Herein, a part of the PHY layer is a function performed at performed at a relatively lower level than the DU 210 among the functions of the PHY layer, and may include, for example, iFFT conversion (or FFT conversion), cyclic prefix (CP) insertion (or CP removal), and digital beamforming. In FIG. 4, an example of such a specific function split is described in detail. The RU 220 may be referred to as access unit (AU), access point (AP), transmission/reception point (TRP), remote radio head (RRH), radio unit (RU), or other terms having equivalent technical meanings. According to an embodiment, if the RU 220 complies with the O-RAN standard, it may be referred to as an O-RAN RU (O-RU). The RU 220 may be replaced with and represented as a second network entity for a base station (e.g., gNB) in embodiments of the present disclosure, as needed.

Although FIG. 2A describes that the base station 110 includes the DU 210 and the RU 220, the embodiments of the present disclosure are not limited thereto. The base station according to the embodiments may be implemented in a distributed deployment according to a centralized unit (CU) configured to perform functions of upper layers (e.g., packet data convergence protocol (PDCP), radio resource control (RRC)) of an access network and a distributed unit (DU) configured to perform functions of lower layers. At this time, the distributed unit (DU) may include the digital unit (DU) and the radio unit (RU) of FIG. 1. Between a core (e.g., 5G core (5GC) or next generation core (NGC)) network and a radio access network (RAN), the base station may be implemented in a structure in which CU, DU, and RU are arranged in order. An interface between the CU and the distributed unit (DU) may be referred to as an F1 interface.

A centralized unit (CU) may be in charge of functions of a higher layer than the DU, by being connected to one or more DUs. For example, the CU may be in charge of radio resource control (RRC) and a function of a packet data convergence protocol (PDCP) layer, and the DU and the RU may be in charge of functions of lower layers. The DU may perform radio link control (RLC), media access control (MAC), and some functions (high PHY) of PHY layer, and the RU may perform remaining functions (low PHY) of the PHY layer. In addition, as an example, a digital unit (DU) may be included in a distributed unit (DU) according to the implementation of distributed deployment of the base station. Hereinafter, unless otherwise defined, it is described as operations of the digital unit (DU) and the RU, but various embodiments of the present disclosure may be applied to both of a base station arrangement including the CU or an arrangement where the DU is directly connected to a core network (i.e., the CU and the DU are integrated into a base station (e.g., NG-RAN node) which is a single entity).

FIG. 2B illustrates a fronthaul interface of an open (O)-radio access network (RAN). As a base station 110 according to distributed deployment, eNB or gNB is exemplified.

Referring to FIG. 2B, the base station 110 may include an O-DU 251 and O-RUs 253-1, ..., and 253-n. Hereinafter, for convenience of explanation, an operation and a function of the O-RU 253-1 may be understood as a description of each of other O-RUs (e.g., O-RU 253-n).

The O-DU 251 is a logical node including functions among functions of a base station (e.g., eNB, gNB) according to FIG. 4 to be described later, except for functions allocated exclusively to the O-RU 253-1. The O-DU 251 may control operations of the O-RUs 253-1, ..., and 253-n. The O-DU 251 may be referred to as a lower layer split (LLS) central unit (CU). The O-RU 253-1 is a logical node including a subset among the functions of a base station (e.g., eNB, gNB) according to FIG. 4 to be described later. The real-time aspect of the control plane (C-plane) communication and user plane (U-plane) communication with the O-RU 253-1 may be controlled by the O-DU 251.

The O-DU 251 may perform communication with the O-RU 253-1 through an LLS interface. The LLS interface corresponds to a fronthaul interface. The LLS interface refers to a logical interface between the O-DU 251 and the O-RU 253-1 using lower layer functional split (i.e., intra-PHY-based functional split). The LLS-C between the O-DU 251 and the O-RU 253-1 provides a C-plane through the LLS interface. The LLS-U between the O-DU 251 and the O-RU 253-1 provides a U-plane through the LLS interface.

In FIG. 2B, entities of the base station 110 have been described as O-DU and O-RU to describe O-RAN. However, these designations are not to be construed as limiting the embodiments of the present disclosure. In embodiments described below, operations of the DU 210 may also be performed by the O-DU 251. A description of the DU 210 may be applied to the O-DU 251. Likewise, in embodiments described below, operations of the RU 220 may also be performed by the O-RU 253-1. A description of the RU 220 may be applied to the O-RU 253-1.

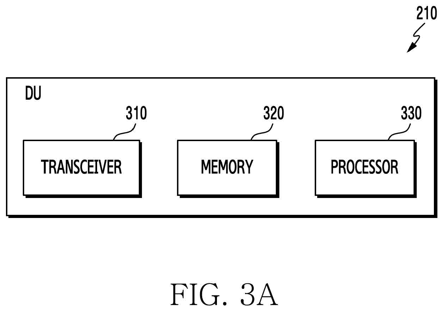

FIG. 3A illustrates a functional configuration of a distributed unit (DU). A configuration exemplified in FIG. 3A, which is as a part of a base station, may be understood as a configuration of the DU 210 of FIG. 2A (or the O-DU 251 of FIG. 2B). Hereinafter, the terms '...unit' and '...er' used below refer to a unit processing at least one function or operation, which may be implemented by hardware or software, or a combination of hardware and software.

Referring to FIG. 3A, a DU 210 includes a transceiver 310, memory 320, and a processor 330.

The transceiver 310 may perform functions for transmitting and receiving a signal in a wired communication environment. The transceiver 310 may include a wired interface for controlling a direct device-to-device connection through a transmission medium (e.g., copper wire, optical fiber). For example, the transceiver 310 may transmit an electrical signal to another device through a copper wire or perform conversion between an electrical signal and an optical signal. The DU 210 may communicate with a radio unit (RU) through the transceiver 310. The DU 210 may be connected to a core network or a CU of a distributed deployment through the transceiver 310.

The transceiver 310 may also perform functions for transmitting and receiving a signal in a wireless communication environment. For example, the transceiver 310 may perform a conversion function between a baseband signal and a bit string according to a physical layer specification of a system. For example, upon transmitting data, the transceiver 310 generates complex-valued symbols by encoding and modulating a transmission bit string. In addition, upon receiving data, the transceiver 310 restores a received bit string by demodulating and decoding a baseband signal. In addition, the transceiver 310 may include a plurality of transmission/reception paths. In addition, according to an embodiment, the transceiver 310 may be connected to a core network or to other nodes (e.g., integrated access backhaul (IAB)).

The transceiver 310 may transmit and receive a signal. For example, the transceiver 310 may transmit a management plane (M-plane) message. For example, the transceiver 310 may transmit a synchronization plane (S-plane) message. For example, the transceiver 310 may transmit a control plane (C-plane) message. For example, the transceiver 310 may transmit a user plane (U-plane) message. For example, the transceiver 310 may receive the U-plane message. Although only the transceiver 310 is illustrated in FIG. 3A, the DU 210 may include two or more transceivers according to another implementation.

The transceiver 310 transmits and receives a signal as described above. Accordingly, all or some of the transceiver 310 may be referred to as a 'communication unit', a 'transmission unit', a 'reception unit', or a 'transmission/reception unit'. In addition, in the following description, transmission and reception performed through a wireless channel are used to the meaning including that the processing as described above is performed by the transceiver 310.

Although not illustrated in FIG. 3A, the transceiver 310 may further include a backhaul transceiver for connection with a core network or another base station. The backhaul transceiver provides an interface for performing communication with other nodes in the network. In other words, the backhaul transceiver converts a bit string transmitted from a base station to another node, such as another access node, another base station, an upper node, and a core network into a physical signal, and converts a physical signal received from another node into a bit string.

The memory 320 stores a basic program, an application program, and data such as configuration information for an operation of the DU 210. The memory 320 may be referred to as a storage unit. The memory 320 may be configured with a volatile memory, a nonvolatile memory, or a combination of the volatile memory and the nonvolatile memory. In addition, the memory 320 provides stored data according to a request from the processor 330.

The processor 330 controls overall operations of the DU 210. The processor 380 may be referred to as a control unit. For example, the processor 330 transmits and receives a signal through the transceiver 310 (or through a backhaul communication unit). In addition, the processor 330 writes and reads data in the memory 320. In addition, the processor 330 may perform functions of a protocol stack required in a communication standard. Although only the processor 330 is illustrated in FIG. 3A, the DU 210 may include two or more processors according to another implementation.

A configuration of the DU 210 illustrated in FIG. 3A is only an example, and an example of the DU performing the embodiments of the present disclosure is not limited to the configuration illustrated in FIG. 3A. In some embodiment, some configurations may be added, deleted, or changed.

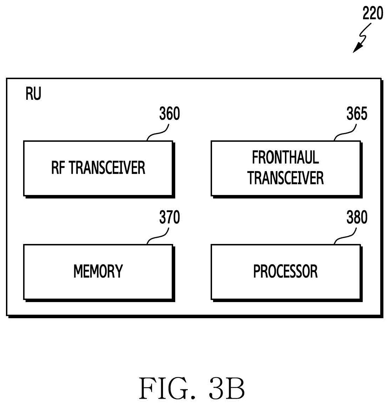

FIG. 3B illustrates a functional configuration of a radio unit (RU). A configuration exemplified in FIG. 3B, which is as a part of a base station, may be understood as a configuration of the RU 220 of FIG. 2B or the O-RU 253-1 of FIG. 2B. Hereinafter, the terms '...unit' and '...er' used below refer to a unit processing at least one function or operation, which may be implemented by hardware or software, or a combination of hardware and software.

Referring to FIG. 3B, the RU 220 includes an RF transceiver 360, a fronthaul transceiver 365, memory 370, and a processor 380.

The RF transceiver 360 performs functions for transmitting and receiving a signal through a wireless channel. For example, the RF transceiver 360 up-converts a baseband signal into an RF band signal and then transmits it through an antenna, and down-converts an RF band signal received through the antenna into a baseband signal. For example, the RF transceiver 360 may include a transmission filter, a reception filter, an amplifier, a mixer, an oscillator, a DAC, an ADC.

The RF transceiver 360 may include a plurality of transmission/reception paths. Furthermore, the RF transceiver 360 may include an antenna unit. The RF transceiver 360 may include at least one antenna array composed of a plurality of antenna elements. In terms of hardware, the RF transceiver 360 may be composed of a digital circuit and an analog circuit (e.g., a radio frequency integrated circuit (RFIC)). Herein, the digital circuit and the analog circuit may be implemented as a single package. In addition, the RF transceiver 360 may include a plurality of RF chains. The RF transceiver 360 may perform beamforming. In order to provide directivity to a signal to be transmitted and received according to the setting of the processor 380, the RF transceiver 360 may apply beamforming weights to the signal. According to an embodiment, the RF transceiver 360 may include a radio frequency (RF) block (or RF unit).

According to an embodiment, the RF transceiver 360 may transmit and receive a signal on a radio access network. For example, the RF transceiver 360 may transmit a downlink signal. The downlink signal may include a synchronization signal (SS), a reference signal (RS) (e.g., cell-specific reference signal (CRS), demodulation (DM)-RS), system information (e.g., MIB, SIB, remaining system information (RMSI), other system information (OSI)), configuration message, control information or downlink data. In addition, for example, the RF transceiver 360 may receive an uplink signal. The uplink signal may include a random access-related signal (e.g., random access preamble (RAP)) (or message 1 (Msg1), message 3 (Msg3)), a reference signal (e.g., sounding reference signal (SRS), DM-RS), or a power headroom report (PHR). Although only the RF transceiver 360 is illustrated in FIG. 3B, the RU 220 may include two or more RF transceivers according to another implementation.

According to embodiments, the RF transceiver 460 may transmit an RIM-RS. The RF transceiver 460 may transmit a first type of RIM-RS (e.g., RIM-RS type 1 of 3GPP) to inform the detection of remote interference. The RF transceiver 460 may transmit a second type of RIM-RS (e.g., RIM-RS type 2 of 3GPP) to inform the presence or absence of remote interference.

The fronthaul transceiver 365 may transmit and receive a signal. According to an embodiment, the fronthaul transceiver 365 may transmit and receive a signal on a fronthaul interface. For example, the fronthaul transceiver 365 may receive a management plane (M-plane) message. For example, the fronthaul transceiver 365 may receive a synchronization plane (S-plane) message. For example, the fronthaul transceiver 365 may receive a control plane (C-plane) message. For example, the fronthaul transceiver 365 may transmit a user plane (U-plane) message. For example, the fronthaul transceiver 365 may receive a U-plane message. Although only the fronthaul transceiver 365 is illustrated in FIG. 3B, the RU 220 may include two or more fronthaul transceivers according to another implementation.

As described above, the RF transceiver 360 and the fronthaul transceiver 365 transmit and receive a signal. Accordingly, all or some of the RF transceiver 360 and the fronthaul transceiver 365 may be referred to as a 'communication unit', a 'transmission unit', a 'reception unit', or a 'transmission/reception unit'. In addition, in the following description, transmission and reception performed through a wireless channel are used to the meaning including that the processing as described above is performed by the RF transceiver 360. In the following description, transmission and reception performed through a wireless channel are used to the meaning including that the processing as described above is performed by the RF transceiver 360.

The memory 370 stores a basic program, an application program, and data such as configuration information for an operation of the RU 220. The memory 370 may be referred to as a storage unit. The memory 370 may be configured with a volatile memory, a nonvolatile memory, or a combination of the volatile memory and the nonvolatile memory. In addition, the memory 370 provides stored data according to a request from the processor 380. According to an embodiment, the memory 370 may include a memory for a condition, a command, or a setting value related to an SRS transmission scheme.

The processor 380 controls overall operations of the RU 220. The processor 380 may be referred to as a control unit. For example, the processor 380 transmits and receives a signal through the RF transceiver 360 or the fronthaul transceiver 365. In addition, the processor 380 writes and reads data in the memory 370. In addition, the processor 380 may perform functions of a protocol stack required by a communication standard. Although only the processor 380 is illustrated in FIG. 3B, the RU 220 may include two or more processors according to another implementation. The processor 380, which is an instruction set or code stored in the memory 370, may be an instruction/code at least temporarily resided in the processor 380 or a storage space storing instruction/code, or part of circuitry constituting the processor 380. In addition, the processor 380 may include various modules for performing communication. The processor 380 may control the RU 220 to perform operations according to embodiments to be described later.

A configuration of the RU 220 illustrated in FIG. 3B is only an example, and an example of the RU performing the embodiments of the present disclosure is not limited to the configuration illustrated in FIG. 3B. In some embodiment, some configurations may be added, deleted, or changed.

FIG. 4 illustrates an example of a function split between a DU and an RU according to embodiments. As wireless communication technology advances (e.g., the introduction of 5th generation (5G) communication system (or new radio (NR) communication system)), the used frequency bands have increased further. As a cell radius of base stations became very small, the number of RUs required to be installed further increased. In addition, in the 5G communication system, as the amount of data transmitted has increased significantly by more than 10 times, a transmission capacity of a wired network transmitted to a fronthaul has increased significantly. Due to the above-described factors, the installation cost of a wired network in the 5G communication system may be increased significantly. Therefore, in order to reduce the transmission capacity of the wired network and reduce the installation cost of the wired network, a 'function split' to reduce a transmission capacity of the fronthaul by transferring some functions of the DU's modem to the RU may be used.

In order to reduce the burden on the DU, a role of the RU, which was in charge of only the existing RF function, may be extended to include some functions of a physical layer. As the RU performs functions of the higher layer, the throughput of the RU increases, which may increase a transmission bandwidth in the fronthaul while lowering the delay time requirement constraints due to response processing. On the other hand, as the RU performs the functions of the higher layer, a virtualization gain decreases and the size, weight, and cost of the RU increase. In consideration of the trade-off of the above-described advantages and disadvantages, it is required to implement an optimal function split.

Referring to FIG. 4, function splits in a physical layer below a MAC layer are illustrated. In a case of downlink (DL) transmitting signals to a terminal through a wireless network, a base station may sequentially perform channel encoding/scrambling, modulation, layer mapping, antenna mapping, RE mapping, digital beamforming (e.g., precoding), iFFT conversion/CP insertion, and RF conversion. In a case of uplink (UL) receiving signals from a terminal through the wireless network, the base station may sequentially perform RF conversion, FFT conversion/CP removal, digital beamforming (pre-combining), RE demapping, channel estimation, layer demapping, demodulation, decoding/discrambling. According to the above-described trade-off, the split of uplink functions and downlink functions may be defined in various types, by needs among vendors, discussion of standards, and the like.

In a first function split 405, the RU performs the RF function, and the DU performs the PHY function. The first function split is substantially such that the PHY function is not implemented within the RU, and as an example, it may be referred to as Option 8. In a second function split 410, the RU performs iFFT conversion/CP insertion in the DL of the PHY function and FFT conversion/CP removal in the UL, and the DU performs the remaining PHY functions. As an example, the second function split 410 may be referred to as Option 7-1. In a third function split 420a, the RU performs iFFT conversion/CP insertion in the DL of the PHY function and FFT conversion/CP removal and digital beamforming in the UL, and the DU performs the remaining PHY functions. As an example, the third function split 420a may be referred to as Option 7-2x Category A. In a fourth function split 420b, the RU performs digital beamforming in both DL and UL, and the DU performs upper PHY functions after digital beamforming. As an example, the fourth function split 420b may be referred to as Option 7-2x Category B. In a fifth function split 425, the RU performs RE mapping (or RE demapping) in both DL and UL, and the DU performs upper PHY functions after RE mapping (or RE demapping). As an example, the fifth function split 425 may be referred to as Option 7-2. In a sixth function split 430, the RU performs up to modulation (or demodulation) in both DL and UL, and the DU performs upper PHY functions after modulation (or demodulation). As an example, the sixth function split 430 may be referred to as Option 7-3. In a seventh function split 440, the RU performs up to encoding/scrambling (or decoding/discrambling) in both DL and UL, and the DU performs upper PHY functions after modulation (or demodulation). As an example, the seventh function split 440 may be referred to as option 6.

According to an embodiment, in a case that a large amount of signal processing is expected, such as in FR 1 MMU, a function split (e.g., the fourth function split 420b) in a relatively high layer may be required to reduce a fronthaul capacity. Additionally, in a function split (e.g., the sixth function split 430) at a too high layer, as a control interface becomes complex and multiple PHY processing blocks are included in the RU, which may cause a burden on the implementation of the RU, a suitable function split may be required according to the arrangement and implementation method of the DU and RU.

According to an embodiment, in a case that precoding of data received from the DU cannot be processed (i.e., in a case that there is a limit to the precoding capability of the RU), the third function split 420a or a lower function split (e.g., the second function split 410) may be applied. Conversely, in a case that there is a capability to process precoding of data received from the DU, the fourth function split 420b or a higher function split (e.g., the sixth function split 430) may be applied.

Hereinafter, unless otherwise specified, the embodiments in the present disclosure are described based on the third function split 420a (it may be referred to as category A (CAT-A)), or the fourth function split 420b (it may be referred to as category B (CAT-B)) for performing beamforming processing in the RU. In the O-RAN standard, the type of O-RU is distinguished according to whether the precoding function is located at an interface of the O-DU or an interface of the O-RU. An O-RU in which precoding is not performed (i.e., low complexity) may be referred to as a CAT-A O-RU. An O-RU in which precoding is performed may be referred to as a CAT-B O-RU.

Hereinafter, an upper PHY means a physical layer processing processed in a DU of a fronthaul interface. For example, the upper-PHY may include FEC encoding/decoding, scrambling, modulation/demodulation. Hereinafter, a lower-PHY means a physical layer processing processed in an RU of the fronthaul interface. For example, the lower-PHY may include FFT/iFFT, digital beamforming, physical random access channel (PRACH) extraction, and filtering. However, the above-described criteria do not exclude embodiments through other function splits. Functional configurations, signaling, or operations of embodiments, may be applied not only to the third function split 420a or the fourth function split 420b, but also to other function splits.

The embodiments of the present disclosure exemplarily describe standards of eCPRI and O-RAN as a fronthaul interface when transmitting a message between a DU (e.g., the DU 210) of FIG. 2A) and an RU (e.g., the RU 220 of FIG. 2A). The Ethernet payload of the message may include an eCPRI header, an O-RAN header, and an additional field. Hereinafter, various embodiments of the present disclosure are described using standard terms of eCPRI or O-RAN, but other expressions having equivalent meanings to each term may be used as substitutes in various embodiments of the present disclosure. Hereinafter, various embodiments of the present disclosure are described using the standard term of eCPRI or O-RAN, but are not limited thereto. For example, in various embodiments of the present disclosure, a CPRI standard may be used as a fronthaul interface.

Ethernet and eCPRI, which are easy to share with networks, may be used as a transport protocol of fronthaul. The eCPRI header and the O-RAN header may be included in the Ethernet payload. The eCPRI header may be located at the front of the Ethernet payload. The eCPRI header has the following contents.
1) ecpriVersion (4 bits): This parameter indicates an eCPRI protocol version.
2) ecpriReserved (3 bits): This parameter is reserved for further use of eCPRI.
3) ecpriConcatenation (1 bit): This parameter indicates when eCPRI concatenation is in use.
4) ecpriMessage (1 byte): This parameter indicates a type of a service carried by a message type. For example, the parameter indicates an IQ data message, a real-time control data message, or a transport network delay measurement message.
5) ecpriPayload (2 bytes): This parameter indicates a byte size of a payload portion of the eCPRI message.
6) ecpriRtcid/ecpriPcid (2 bytes): This parameter is an extended Antenna-carrier (eAxC) identifier (eAxC ID) and identifies a specific data flow related to each of C-plane (ecpriRtcid) or U-plane (ecpriPcid) message.
7) ecpriSeqid (2 bytes): This parameter provides unique message identification and order at two levels. The first octet of this parameter is a sequence ID used to identify the order of messages within an eAxC message stream, and the sequence ID is used to ensure that all messages are received and to reorder out-of-order messages. The second octet of this parameter is a subsequence ID. The subsequence ID is used to verify ordering and implement reordering when radio-transport-level (eCPRI or IEEE-1914.3) fragmentation occurs.

The eAxC identifier (ID) includes a band and sector identifier ('BandSector_ID'), a component carrier identifier ('CC_ID'), a spatial stream identifier ('RU_Port_ID'), and a distributed unit identifier ('DU_Port_ID'). The bit allocation of the eAxC ID may be distinguished as follows.
1) DU_port ID: The DU_port ID is used to distinguish processing units in the O-DU (e.g. different baseband cards). It is expected that the O-DU will allocate bits for the DU_port ID and the O-RU will attach the same value to the UL U-plane message carrying the same sectionId data.
2) BandSector_ID: Aggregated cell identifier (identification of band and sector supported by O-RU).
3) CC_ID: CC_ID identifies carrier components supported by the O-RU.
4) RU_port ID: The RU_port ID designates logical flows such as data layer or spatial streams, and logical flows such as separate numerologies (e.g., PRACH) or signal channels like SRS requiring specific antenna assignments.

An application protocol of the fronthaul may include a control plane (C-plane), a user plane (U-plane), a synchronization plane (S-plane), and a management plane (M-plane).

The control plane may be configured to provide scheduling information and beamforming information via a control message. The control plane means real-time control between the DU and the RU. The user plane may include IQ sample data transmitted between the DU and the RU. The user plane may include downlink data (IQ data or SSB/RS), uplink data (IQ data or SRS/RS), or PRACH data of the user. A weight vector of the beamforming information described above may be multiplied by the user's data. The synchronization plane generally means traffic between the DU and the RU for a synchronization controller (e.g., IEEE grand master). The synchronization plane may be related to timing and synchronization. The management plane means non-real-time control between the DU and the RU. The management plane may be related to initial setup, non-realtime reset or reset, and non-realtime report.

A message in the control plane, that is, the C-plane message, may be encapsulated based on a two-layer header approach. A first layer may be configured with eCPRI common header or the IEEE 1914.3 common header, which includes fields used to indicate a message type. A second layer is an application layer, which includes fields necessary for control and synchronization. In the application layer, a section defines a characteristic of U-plane data transmitted or received on a beam with one pattern ID. The section types supported within the C-plane are as follows.

Section Type may indicate the purpose of the control message transmitted in the control plane. For example, the purposes of Section Type are as follows.
1) sectionType=0: Used to indicate resource blocks or symbols not used in the DL or the UL.
2) sectionType=1: Used for most DL/UL wireless channels. Herein, "most" refers to channels that do not require time or frequency offsets such as those required for mixed numerology channels.
3) sectionType=2: reserved for further use
4) sectionType=3: PRACH and mixed-numerology channels. Channels that require time or frequency offsets or differ from the nominal SCS value(s).
5) sectionType=4: reserved for further use
6) sectionType=5: UE scheduling information. Transmits UE scheduling information so that the RU can perform real-time BF weight calculation (O-RAN optional BF method)
7) sectionType=6: Transmit UE-specific channel information. Periodically transmits UE channel information so that the RU can perform real-time BF weight calculation (O-RAN optional BF method)
8) sectionType=7: Used for LAA support

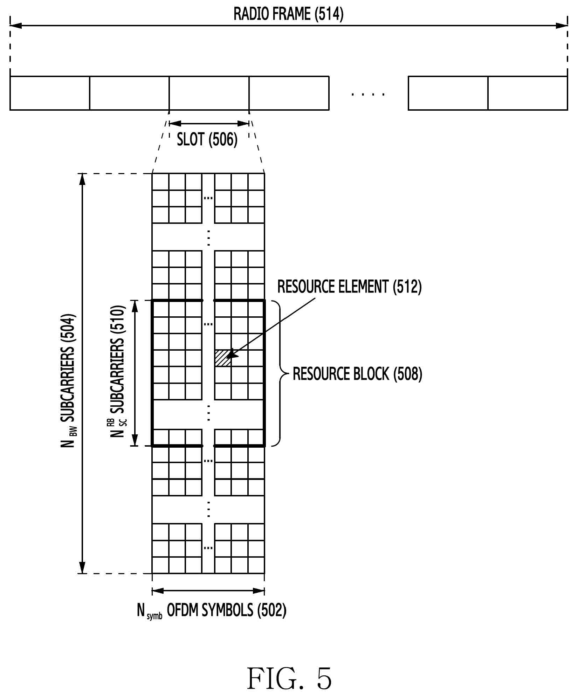

FIG. 5 illustrates an example of a resource structure of a time-frequency domain supported by a wireless communication system. FIG. 5 exemplifies a basic structure of a time-frequency domain, which is a radio resource domain in which data or a control channel is transmitted in a downlink or an uplink in a 5G NR system to which the present embodiment may be applied.

Referring to FIG. 5, a horizontal axis indicates a time domain, and a vertical axis indicates a frequency domain. A minimum transmission unit in the time domain is an OFDM symbol, and N_{symb} OFDM symbols 502 are gathered to configure a slot 506. Referring to FIG. 4, in the wireless communication system to which the present invention is applied, a radio frame 514 may be defined as having a length of 10 ms, which is configured with 10 subframes having the same length of 1 ms. In addition, the radio frame 514 may be divided into half-frames of 5 ms, and each half-frame includes 5 subframes. In FIG. 5, the slot 506 may be configured with 14 OFDM symbols, but a length of the slot may vary according to subcarrier spacing. For example, in a case of numerologies having subcarrier spacing of 15 khz, the slot is configured to have a length of 1 ms, which is the same length as a subframe. In contrast, in a case of numerologies having subcarrier spacing of 30 khz, the slot is configured with 14 OFDM symbols, but two slots may be included in one subframe with a length of 0.5 ms.

That is, a subframe and a frame are defined with a fixed time length, and a slot is defined as the number of symbols, such that a time length thereof may vary according to subcarrier spacing. Referring again to FIG. 5, a radio resource supported by the wireless communication system may be configured with a symbol, which is a plurality of time resources, and a subcarrier, which is a plurality of frequency resource, and each time resource and frequency resource may be represented as a two-dimensional resource grid. In FIG. 5, one quadrilateral, which is the smallest physical resource configured with one sub-carrier and one symbol in the resource grid, is referred to as a resource element (RE) 512.

In the wireless communication system to which the invention proposed in the present specification may be applied, a minimum transmission unit in the frequency domain is a subcarrier, and a carrier bandwidth configuring the resource grid is configured with N_{BW} subcarriers 504.

A basic unit of a resource in the time-frequency domain is a resource element (hereinafter referred to as 'RE') 512, and may be indicated as an OFDM symbol index and a subcarrier index. A resource block 508 may include a plurality of resource elements 512. In a wireless communication system to which the present invention proposed in this specification may be applied, a resource block (RB) 508 (or a physical resource block, hereinafter 'PRB') may be defined as N_{symb} consecutive OFDM symbols in the time domain and N_{SC}^{RB} consecutive subcarriers in the frequency domain. In an NR system, a resource block (RB) **5**08 may be defined as N_{SC}^{RB} consecutive subcarriers 510 in the frequency domain. One RB **5**08 includes N_{SC}^{RB} REs **5**12 on a frequency axis.

In general, a minimum unit of transmission of data is RB and the number of subcarriers is N_{SC}^{RB}=12. The frequency domain may include common resource blocks (CRB). A physical resource block (PRB) may be defined in a bandwidth part (BWP) on the frequency domain. The CRB and PRB numbers may be determined according to a subcarrier spacing. A data rate may increase in proportion to the number of RBs scheduled for a terminal.

In the NR system, a downlink transmission bandwidth and an uplink transmission bandwidth may be different in a case of a frequency division duplex (FDD) system that operates by dividing the downlink and the uplink by a frequency. A channel bandwidth indicates a radio frequency (RF) bandwidth corresponding to a system transmission bandwidth. Table 1 indicates a portion of a correspondence among a system transmission bandwidth, a subcarrier spacing (SCS) and a channel bandwidth defined in the NR system in a frequency band (e.g., a frequency range (FR) 1 (310 MHz to 7125 MHz)) lower than an upper limit (e.g., 7.125 GHz) defined in the specifications. Table 2 indicates a portion of a correspondence among a transmission bandwidth, a subcarrier spacing, and a channel bandwidth defined in the NR system in a frequency band (e.g., FR2 (24250 MHz - 52600 MHz) or FR2-2 (52600 MHz to 71,000 MHz)) higher than a lower limit (e.g., 24.25GHz) defined in the standard. For example, in an NR system having a channel bandwidth of 100 MHz with a subcarrier spacing of 30 kHz, a transmission bandwidth is configured with 273 RBs. In Table 1 and Table 2, N/A may be a bandwidth-subcarrier combination that is not supported in the NR system.

**[Table 1]**

| | | | | | | | |
|---|---|---|---|---|---|---|---|
| Channel bandwidth [MHz] | SCS | 5 | 10 | 20 | 50 | 80 | 100 |
| Transmission bandwidth configuration N_{RB} | 15kHz | 25 | 52 | 106 | 207 | N/A | N/A |
| | 30kHz | 11 | 24 | 51 | 133 | 217 | 273 |
| | 60kHz | N/A | 11 | 24 | 65 | 107 | 135 |

**[Table 2]**

| | | | | | |
|---|---|---|---|---|---|
| Channel bandwidth [MHz] | SCS | 50 | 100 | 200 | 400 |
| Transmission bandwidth configuration N_{RB} | 60kHz | 66 | 132 | 264 | N/A |
| | 120kHz | 32 | 66 | 132 | 264 |

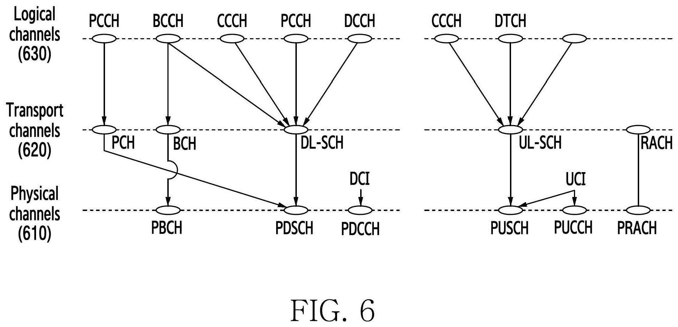

FIG. 6 illustrates an example of channels in a communication standard.

FIG. 6 illustrates an example of channels in a communication standard. The channels may include a physical channel 610, a transport channel 620, and a logical channel 630 according to layers defined in the communication standard.

Referring to FIG. 6, the physical channel 610 may provide functions (e.g., channel coding, HARQ processing, modulation, multi-antenna processing, and resource mapping) that are necessary to generate physical signals in a physical layer. In the physical layer, the physical signals are modulated in an OFDM scheme and may be transmitted in a wireless environment via a time-frequency resource (e.g., the resource of the resource grid of FIG. 5).

In downlink transmission, the physical channel 610 may include at least one of a physical broadcast channel (PBCH), a physical downlink shared channel (PDSCH), or a physical downlink control channel (PDCCH). The PDCCH may be used to carry downlink control information (DCI). In general, downlink data may refer to symbols transmitted through the PDSCH, and a downlink control signal may include to symbols transmitted through the PDCCH. In addition, in a downlink, an SS/PBCH block including a synchronization signal (e.g., a primary synchronization signal (PSS), or a secondary synchronization signal (SSS)) for synchronization and a broadcast signal (e.g., PBCH) may be transmitted in addition to channels illustrated in FIG. 6. In addition, in the downlink, a channel state information-reference signal (CSI-RS) for obtaining measurement or channel information, a demodulation reference signal (DMRS) for channel estimation and demodulation, and a phase tracking reference signal (PTRS) may be transmitted.

In uplink transmission, the physical channel 610 may include at least one of a physical uplink shared channel (PUSCH), a physical uplink control channel (PUCCH), or a physical random access channel (PRACH). The PUSCH or the PUCCH may be used to carry uplink control information (UCI). In general, uplink data may refer to symbols transmitted through the PUSCH, and an uplink control signal may include symbols corresponding to the UCI. For example, the UCI may include at least one of a scheduling request (SR), a hybrid automatic request (HARQ)-acknowledge (ACK) bit(s), or channel state information (CSI). In addition, in uplink, the DMRS for channel estimation and demodulation, and the PTRS may be transmitted in the downlink for the channel estimation, in addition to the channels illustrated in FIG. 6.

The transport channel 620 may connect a physical layer and a medium access channel (MAC) layer located at a higher level of the physical layer, and may be classified according to how data is transmitted through a wireless interface. In the downlink, the transport channel 620 may include at least one of a paging channel (PCH) for paging, a broadcast channel (BCH) for broadcasting system information, and a downlink shared channel (DL-SCH) transmission of downlink data. In the uplink, the transport channel 620 may include at least one of a random access channel (RACH) for transmission of a random access preamble or an uplink shared channel (UL-SCH) for transmission of downlink data.

The logical channel 630 is located above the transport channel and is mapped to the transport channel 620. The logical channel 630 may be classified into a control channel for transmitting control area information and a traffic channel for transmitting user area information. The control channel of the logical channel 630 may include at least one of a paging control channel (PCCH), a broadcast control channel (BCCH), a common control channel (CCCH), or a dedicated control channel (DCCH). The traffic channel of the logical channel 630 may include a dedicated traffic channel (DTCH).

In describing embodiments of the present disclosure, the random access signal may include sequences transferred through a physical random access channel (PRACH). 'data' may include signals other than a reference signal. For example, 'data' obtained by a receiver in uplink communication may include signals transmitted through the PUSCH. However, the PUSCH is an example, and it is certain that the embodiments of the present disclosure may be applied to other channels (e.g., PDSCH, PBCH, PDCCH, and PUCCH) that require channel estimation.

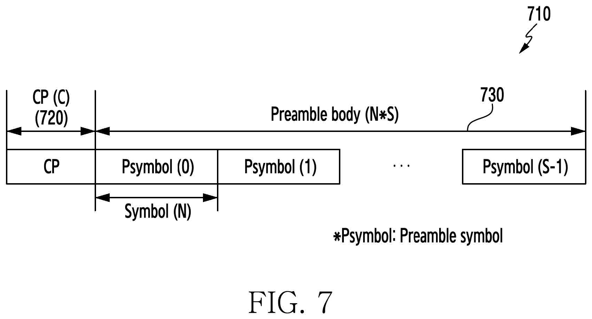

FIG. 7 illustrates an example of a structure of a random access signal. The random access signal may be transmitted through a PRACH. The random access signal may be referred to as a PRACH, a preamble, a random access channel (RACH) preamble, a RACH signal, a random access preamble, or a term having a technical meaning equivalent thereto.

Referring to FIG. 7, a random access signal 710 may include a CP 720 and a preamble body 730. The preamble body 730 may include one or more symbols (or one or more preamble symbols). The number of the one or more symbols may have various values according to a preamble format specified in a standard (e.g., 3GPP LTE or 3GPP NR). Reception of the random access signal 710 through the PRACH may be performed through the preamble body 730.

The random access signal 710 may be generated based on a sequence according to a preamble length (e.g., a Zadoff-Chu (ZC) sequence). The preamble length, which is an LRA value, may have various values. For example, a length of the preamble may be 839. For another example, a length of the preamble may be 139.

According to the preamble length, a preamble format for the random access signal 710 may be determined. For example, a preamble format having the length of 839 may be configured as in Table 3.

**[Table 3]**

| **Format** | ***L*_{RA}** | ***Δf*^{RA}** | ***Nᵤ*** | ${N}_{CP}^{RA}$ |
|---|---|---|---|---|
| 0 | 839 | 1.25 kHz | 24576*κ* | 3168*κ* |
| 1 | 839 | 1.25 kHz | 2 · 24576*κ* | 21024*κ* |
| 2 | 839 | 1.25 kHz | 4 · 24576*κ* | 4688*κ* |
| 3 | 839 | 5 kHz | 4 · 6144*κ* | 3168*κ* |

The LRA indicates a preamble length, the ***Δf***^{RA} indicates an SCS, the ***Nᵤ*** indicates a length of the preamble body 730, the ${N}_{CP}^{RA}$ indicates a length of the CP 720, and *κ* indicates a ratio between Ts and Tc. The Ts indicates a basic time unit, and the Tc indicates a sampling time unit.

For example, a preamble format having the length of 139 may be configured as in Table 4.

**[Table 4]**

| **Format** | ***L*_{RA}** | ***Δf*^{RA}** | ***Nᵤ*** | ${N}_{CP}^{RA}$ |
|---|---|---|---|---|
| A1 | 139 | 15*·* 2*^{µ}* kHz | 2 · 2048*κ ·* 2*^{-µ}* | 288*κ ·* 2*^{-µ}* |
| A2 | 139 | 15 *·* 2*^{µ}* kHz | 4 · 2048*κ* · 2^{-*µ*} | 576*κ ·* 2*^{-µ}* |
| A3 | 139 | 15 · 2*^{µ}* kHz | 6 · 2048*κ* · 2^{-*µ*} | 864*κ ·* 2*^{-µ}* |
| B1 | 139 | 15 · 2*^{µ}* kHz | 2 · 2048*κ* · 2^{-*µ*} | 216*κ ·* 2*^{-µ}* |
| B2 | 139 | 15 · 2*^{µ}* kHz | 4 · 2048*κ* · 2^{-*µ*} | 360*κ ·* 2*^{-µ}* |
| B3 | 139 | 15 · 2*^{µ}* kHz | 6 · 2048*κ* · 2^{-*µ*} | 504*κ* · 2^{-*µ*} |
| B4 | 139 | 15 · 2*^{µ}* kHz | 12 · 2048*κ* · 2^{-*µ*} | 936*κ* · 2^{-*µ*} |
| C0 | 139 | 15 · 2*^{µ}* kHz | 2048*κ* · 2^{-*µ*} | 1240*κ* · 2^{-*µ*} |
| C2 | 139 | 15 · 2*^{µ}* kHz | 4 · 2048*κ* · 2^{-*µ*} | 2048*κ* · 2^{-*µ*} |

The LRA indicates a preamble length, the ***Δf***^{RA} indicates an SCS, the ***Nᵤ*** indicates a length of the preamble body 730, the ${N}_{CP}^{RA}$ indicates a length of the CP 720, and the *κ* indicates a ratio between Ts and Tc. The Ts indicates a basic time unit, and the Tc indicates a sampling time unit.

According to an embodiment, in the random access signal 710 of an OFDM-based system, an SCS equal to or smaller than an SCS used in a UL channel may be used to support wide cell coverage. For example, in an LTE system, a UL SCS may be set to 15 kHz, and an SCS of a preamble format 0 may be set to 1.25 kHz.

For example, the random access signal 710 may be generated based on a Zadoff-Chu (ZC) sequence. The ZC sequence may be configured as in the following equation.${x}_{u} \left(n\right) = {e}^{- j \frac{πun \left(n+1\right)}{{N}_{ZC}}} , n = 0 , … , {N}_{ZC} - 1$

Referring to Equation 1, the u is a root sequence number. The N_{ZC} is a length of the ZC sequence. For example, in an LTE system, for a PRACH format0, a ZC sequence in which the N_{ZC} is set to 839 may be used.

According to an embodiment, a terminal 120 may transmit a random access signal (e.g., a random access signal 510 or a PRACH preamble) to a base station 110 through an uplink channel (e.g., a PRACH). The base station 110 may receive the random access signal from the terminal 120. In an Orthogonal Frequency Division Multiplexing (OFDM)-based mobile communication system (e.g., LTE, NR, or NR-U (unlicensed)), in order to receive the random access signal, a PRACH detector based on Fast Fourier Transform/Inverse FFT (FFT/IFFT) is generally required.

In the following specification, a technical feature related to the PRACH detector for receiving a PRACH preamble will be described. For example, when receiving the PRACH preamble in an environment in which a frequency offset exists, the PRACH detector may estimate (or identify) the frequency offset. Meanwhile, in the present disclosure, in order to describe an operation for PRACH reception, an operation of the base station 110 including the PRACH detector is described, but such description does not exclude that at least a portion of operations of the base station 110 are performed by a DU 210 and at least another portion thereof are performed by an RU 220. That is, according to an implementation method of the base station 110, all of operations to be described later may be performed in a single network entity, or the operations may be divided and performed in a plurality of network entities (e.g., the DU 210 and the RU 220). Hereinafter, for convenience of description, it will be described that the operations to be described later are performed in the DU 210, but it is not limited thereto.

According to an embodiment, the PRACH detector may receive a random access signal (or a PRACH preamble) in the environment in which the frequency offset exists. The PRACH detector may only receive a PRACH signal, and may not estimate (or measure) the frequency offset. After the PRACH detector operates, since a physical uplink shared channel (PUSCH) receiver does not have information on the frequency offset, it may estimate the frequency offset based on the maximum frequency offset. In an environment in which a large frequency offset occurs (e.g., inside a high-speed train), a base station according to an NR standard may additionally dispose a reference signal to reduce an interval of a reference signal in a PUSCH. The base station according to the NR standard may include the PUSCH receiver capable of estimating and compensating the frequency offset by using a reference signal having a narrow interval. The base station according to the NR standard may estimate a large frequency offset through the PUSCH receiver. However, in a PUSCH of an LTE standard, an interval of a reference signal may be fixed. For example, in the PUSCH of the LTE standard, the interval of the reference signal may be set to 0.5 ms. The base station of the LTE standard may include a frequency offset estimator using a CP in a PUSCH symbol to estimate the large frequency offset.

As described above, functional blocks for estimating the frequency offset in the PUSCH receiver may be required. However, when the frequency offset is estimated in advance through the PRACH detector, the functional blocks may be omitted. In the following specification, a technical feature for estimating the frequency offset in advance through the PRACH detector and compensating, in advance, the frequency offset estimated through the PRACH detector in the PUSCH receiver will be described. Therefore, an example of the PRACH detector for estimating the frequency offset through the PRACH detector will be described below.

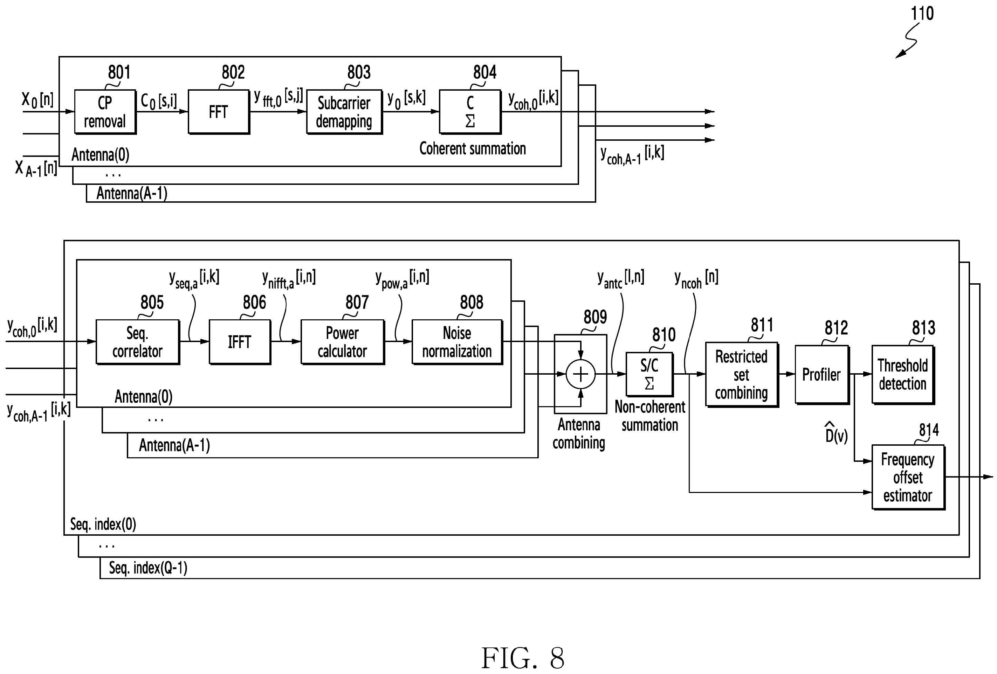

FIG. 8 illustrates an example of a PRACH detector. Operations of the PRACH detector described in FIG. 8 may be performed by a base station (e.g., a base station 110). In order to describe the operations of the PRACH detector, functional blocks are illustrated, but the functional blocks are exemplary, and are not to be interpreted as limiting other embodiments of the present disclosure. In addition, at least a portion of the operations of the PRACH detector may be performed by a network entity (e.g., the RU 220), and remaining operations may be performed by another network entity (e.g., the DU 210). Terms such as '...unit', '...er', and the like used hereinafter mean a unit for processing at least one function or operation, and which may be implemented as hardware, software, or a combination of hardware and software.

Referring to FIG. 8, the base station 110 may receive signals. For example, the base station 110 may be equipped with antennas. The base station 110 may receive the signals through the antennas. A signal received through an a+1-th antenna may be represented as xₐ [n]. The base station 110 may receive a signal x[n] = [x₀ [n] x_{A-1} [n]]^{T}. For example, a terminal (e.g., a terminal 120) may transmit a PRACH signal through an antenna port. The base station 110 may receive the PRACH signal through the plurality of antennas (e.g., 8 reception antennas). Since it is received through different antennas, even though the same PRACH signal is transmitted, the base station 110 may obtain different signals.

In operation 801, the base station 110 may perform CP removal. The CP removal may be performed in a time domain. After removing a CP (e.g., the CP 720 of FIG. 7) from a received signal, the base station 110 may generate a signal in a symbol unit (hereinafter, a time domain signal) based on a preamble body (e.g., the preamble body 730 of FIG. 7). According to an embodiment, due to a specific function split, the operation 801 may be performed by an RU 220 of the base station 110. In other words, the CP removal function corresponding to the operation 801 may be performed by the RU 220. According to another embodiment, due to a specific function split, the operation 801 may be performed by a DU 210 of the base station 110. For example, the time domain signal may be represented by the following equation. According to an embodiment, operation 801 for the random access signal may be performed by the DU 210, and operation 801 for a data signal may be performed by the RU 220.$c \left[s, i\right] = \left[\begin{matrix}{c}_{0} \left[s, i\right] \\ ⋮ \\ {c}_{A - 1} \left[s, i\right]\end{matrix}\right]$

Herein, the s indicates a symbol index (s = 0~S-1, S: the number of symbols), the i indicates a sample index in a symbol (i = 0~N_{FFT}-1, N_{FFT}: an FFT size), and the A indicates the number of antennas of the base station 110 (or the RU 220). The base station 110 may generate the cₐ [s,i] for the a+1-th antenna through a CP removal operation on a signal xₐ [n] received through the a+1-th antenna.

In operation 802, the base station 110 may perform an FFT operation. The base station 110 may generate a frequency domain signal by performing the FFT operation on the time domain signal. According to an embodiment, due to a function split, the operation 802 may be performed by the RU 220 of the base station 110. In other words, the FFT operation corresponding to the operation 802 may be performed by the RU 220. According to another embodiment, due to a specific function split, the operation 802 may be performed by the DU 210 of the base station 110. According to an embodiment, the operation 802 for the random access signal may be performed by the DU 210.

For example, the frequency domain signal may be represented by the following equation.${y}_{fft} \left[s, j\right] = \left[\begin{matrix}{y}_{fft , 0} \left[s, j\right] \\ ⋮ \\ {y}_{fft , A - 1} \left[s, j\right]\end{matrix}\right]$

Herein, the j indicates a subcarrier index, and has a range of j = 0~N_{FFT}-1. The NFFT indicates an FFT length of the operation 802. The base station 110 may generate y_{fft,a} [s,j] for the a+1-th antenna by performing FFT on cₐ [s,i] for the a+1-th antenna.

In operation 803, the base station 110 may perform subcarrier demapping. The subcarrier demapping may identify a signal corresponding to subcarriers allocated for a preamble (hereinafter, a preamble signal) in the frequency domain signal. The base station 110 may identify the preamble signal in the frequency domain signal. According to an embodiment, due to a specific function split, the operation 803 may be performed by the DU 210 of the base station 110. In other words, the subcarrier demapping function corresponding to the operation 803 may be performed by the DU 210. According to another embodiment, due to a specific function split, the operation 803 may be performed by the RU 220 of the base station 110. According to an embodiment, the operation 803 for the random access signal may be performed by the DU 220.

For example, the preamble signal may be represented by the following equation.$y \left[s, k\right] = \left[\begin{matrix}{y}_{0} \left[s, k\right] \\ ⋮ \\ {y}_{A - 1} \left[s, k\right]\end{matrix}\right]$

The k has a value of 0~N_{ZC}-1. The Nzc indicates a length of a preamble sequence (or a ZC sequence) used in a frequency domain, and is less than or equal to N_{FFT}. The base station 110 may generate yₐ [s,k] for the a+1-th antenna by performing subcarrier demapping on y_{fft,a} [s,j] for the a+1-th antenna.

In operation 804, the base station 110 may perform coherent summation on an output preamble signal. For example, through the coherent summation, C symbols may be accumulated. As C symbols are accumulated among total S symbols, (S/C) symbols may be output. Herein, the C may be selected from values that allow the (S/C) to be an integer. The base station 110 may generate y_{coh,a} [l,k] for the a+1-th antenna by performing coherent summation. The C may be selected from values that allow the (S/C) to be an integer. The l is a symbol index ( $1 = 0 ∼ \frac{S}{C} - 1$) after the coherent summation.

According to an embodiment, due to the specific type of function split (e.g., an option 7-2 or 7-2x), the operation 804 may be performed by the DU 210 of the base station 110. However, according to another embodiment, due to the another type of function split, the operation 804 may also be performed by the RU 220 of the base station 110. According to an embodiment, the operation 804 for the random access signal may be performed by the DU 220.

In operation 805, the base station 110 may perform a correlation operation. For example, a preamble sequence may include a ZC sequence. The base station 110 may perform the correlation operation on the sequence according to the operation 804 based on the ZC sequence. For example, the base station 110 may obtain (or generate) y_{seq,a} [l,k] by multiplying a conjugate value of the preamble sequence in the frequency domain by y_{coh,a} [l,k].

According to an embodiment, due to the specific type of function split (e.g., the option 7-2 or 7-2x), the operation 805 may be performed by the DU 210 of the base station 110. However, according to another embodiment, due to the another type of function split, the operation 805 may also be performed by the RU 220 of the base station 110. According to an embodiment, the operation 805 for the random access signal may be performed by the DU 220.

In operation 806, the base station 110 may perform an IFFT operation. The IFFT operation may be performed to convert a frequency domain signal into a time domain signal. For example, a length for the IFFT may be N_{IFFT}. The base station 110 may obtain (or generate) y_{nifft,a} [l,n] through the operation 806. An input (an IFFT input) in the operation 806 may be represented by the following equation.$IFFT input = \left\{\begin{matrix}{y}_{seq , a} \left[l, k\right] , \left(k=0∼{N}_{ZC}-1\right) \\ 0 , \left(k={N}_{ZC}∼{N}_{IFFT}-1\right)\end{matrix}\right.$

According to an embodiment, due to the specific type of function split (e.g., the option 7-2 or 7-2x), the operation 806 may be performed by the DU 210 of the base station 110. However, according to another embodiment, due to the another type of function split, the operation 806 may also be performed by the RU 220 of the base station 110. According to an embodiment, the operation 806 for the random access signal may be performed by the DU 220.

In operation 807, the base station 110 may calculate power. For example, the base station 110 may calculate power of each sample through an absolute value square of an obtained complex number. The base station 110 may obtain (or generate) y_{pow,a} [l,n] through the operation 807. The n is a sample index in the time domain after the IFFT is performed (n = 0~N_{IFFT}-1).

According to an embodiment, due to the specific type of function split (e.g., the option 7-2 or 7-2x), the operation 807 may be performed by the DU 210 of the base station 110. However, according to another embodiment, due to the another type of function split, the operation 807 may also be performed by the RU 220 of the base station 110. According to an embodiment, the operation 807 for the random access signal may be performed by the DU 220.

In operation 808, the base station 110 may perform noise normalization. The base station 110 may estimate noise. The base station 110 may perform normalization based on the estimated noise. The base station 110 may obtain (or generate) y_{noise,a} [l,n] through the operation 808.

According to an embodiment, due to the specific type of function split (e.g., the option 7-2 or 7-2x), the operation 808 may be performed by the DU 210 of the base station 110. However, according to another embodiment, due to the another type of function split, the operation 808 may also be performed by the RU 220 of the base station 110. According to an embodiment, the operation 808 for the random access signal may be performed by the DU 220.

In operation 809, the base station 110 may add power calculated for each antenna. The base station 110 may obtain (or generate) y_{antc} [l,n] through the operation 809.

According to an embodiment, due to the specific type of function split (e.g., the option 7-2 or 7-2x), the operation 809 may be performed by the DU 210 of the base station 110. However, according to another embodiment, due to the another type of function split, the operation 809 may also be performed by the RU 220 of the base station 110. According to an embodiment, the operation 809 for the random access signal may be performed by the DU 220.

In operation 810, the base station 110 may perform non-coherent summation. For example, each of (S/C) symbols may have N_{IFFT} samples. As the (S/C) symbols are accumulated, the base station 110 may obtain N_{IFFT} power values. The base station 110 may obtain (or generate) y_{ncoh} [l,n], which is the N_{IFFT} power values, through the operation 810.

According to an embodiment, due to the specific type of function split (e.g., the option 7-2 or 7-2x), the operation 810 may be performed by the DU 210 of the base station 110. However, according to another embodiment, due to the another type of function split, the operation 810 may also be performed by the RU 220 of the base station 110. According to an embodiment, the operation 810 for the random access signal may be performed by the DU 220.

In operation 811, the base station 110 may perform restricted set combining. For example, when the base station 110 has a set type set to 'unrestricted', the base station 110 may bypass the restricted set combining. When the base station 110 has the set type set to 'unrestricted', the base station 110 may not perform the restricted set combining. For example, when a set type is set to 'typeA', the base station 110 may sum powers located at x = n - *α*dᵤ, n, *n* + *α*dᵤ. For example, when a set type is set to 'typeB', the base station 110 may sum powers located at x = n - 2*α*dᵤ, n - *α*dᵤ, n, *n* + *α*dᵤ, *n* + 2*α*dᵤ. The *α* and the dᵤ may be set as in the following equation.$α = \frac{{N}_{IFFT}}{{N}_{ZC}}$ ${d}_{u} = \left\{\begin{matrix}q 0 \leq q < \frac{{N}_{ZC}}{2} \\ {N}_{ZC} - q otherwise\end{matrix}\right. , mod \left(qu, {N}_{ZC}\right) = 1 , u : Root sequence number$

In the operation 811, a sample index may be set (or assumed) as round(*mod*(*x, N_{IFFT}*)).

According to an embodiment, due to the specific type of function split (e.g., the option 7-2 or 7-2x), the operation 811 may be performed by the DU 210 of the base station 110. However, according to another embodiment, due to the another type of function split, the operation 811 may also be performed by the RU 220 of the base station 110. According to an embodiment, the operation 811 for the random access signal may be performed by the DU 220.

According to an embodiment, the operation 805 to the operation 811 may be repeatedly performed as many as the number Q of preamble sequences.

According to an embodiment, the base station 110 may include a profiler 812. For example, the DU 210 of the base station 110 may include the profiler 812. The profiler 812 may receive output power for each preamble sequence. The profiler 812 may perform a function of calculating power (e.g., the maximum power) and a delay (e.g., a sample index having the maximum power) for each zero correlation zone (ZCZ) (e.g., a cyclic shift (CS) zone in a preamble sequence). The base station 110 may obtain D̂(v) by using the profiler 812. The D̂(v) is a delay having the maximum power in ZCZ (v, *v* = *0~V*(*si*) - 1) of a preamble sequence si. The *V*(*si*) is the number of ZCZs of the preamble sequence si.

The base station 110 may include a detector 813. For example, the DU 210 of the base station 110 may include the detector 813. The detector 813 may compare power and a threshold for each ZCZ in a preamble sequence. By comparing the power and the threshold, the detector 813 may determine whether a random access signal is detected. For example, when the power is greater than the threshold, the detector 813 may determine that the random access signal is detected. When the power is not greater than the threshold, the detector 813 may determine that the random access signal is not detected. Although not illustrated in FIG. 8, the base station 110 may transmit a random access response to the terminal (e.g., the terminal 120) based on the detected random access signal. In addition, the base station 110 may determine a time offset (e.g., timing advance (TA)) based on the detected random access signal.

According to an embodiment, the operation 805 to the operation 811 may be repeatedly performed as many as the number Q of preamble sequences. According to an embodiment, the profiler 812 and the detector 813 may repeatedly determine whether the random access signal is detected as many as the number Q of preamble sequences.

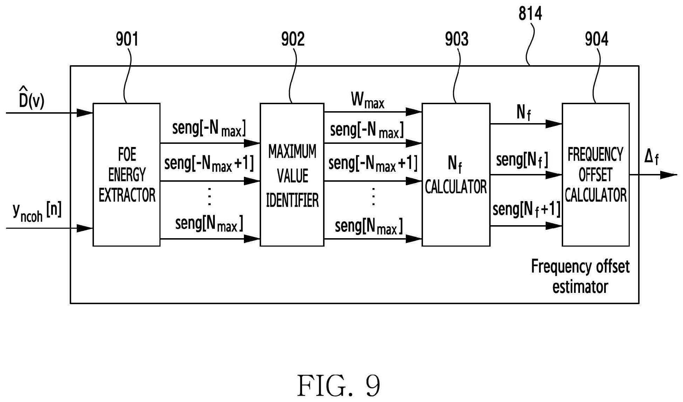

According to an embodiment, the base station 110 (or the PRACH detector) may include a frequency offset estimator 814. The frequency offset estimator 814 may estimate a frequency offset by using a portion of information obtained based on the operation 801 to the operation 811 described above (e.g., D̂(v)) and at least a portion of information obtained through the profiler 812 (e.g., y*_{ncoh}*[l, n]). A specific example of the frequency offset estimator 814 will be described later in FIG. 9.

FIG. 9 illustrates an example of a frequency offset estimator of a PRACH detector.

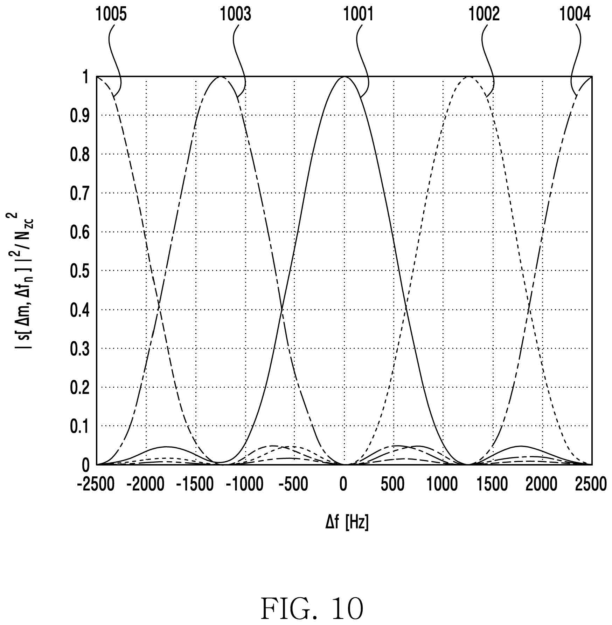

FIG. 10 illustrates an example of graphs for estimating a frequency offset.

Referring to FIG. 9, the *y_{nifft,a}*[l, n] obtained according to the operation 806 of FIG. 8 may be configured as in the following equation.${y}_{nifft , a} \left[l, n\right] = γ ⋅ {h}_{a} \left[l\right] ⋅ {s}_{nifft} \left[n,Δ{f}_{n}\right] + {z}_{nifft , a} \left[l, n\right]$

Referring to Equation 8, the γ (gamma) is a constant generated by coherent summation (e.g., the operation 804), a correlation operation (e.g., the operation 805) (or a sequence correlation operation), and/or N-IFFT (e.g., the operation 806). The h*_{α}*[l] is a channel gain value of an antenna *a* and the Symbol l. The *s_{nifft,a}*[n, Δ*fₙ*] is an output value of IFFT for a reception ZC sequence after the correlation operation (e.g., the operation 805), and effects due to the Δ*fₙ* and a time delay may be considered. The Δ*fₙ* is Δ*f*/Δ*fₛ.* The Δ*f* is a frequency offset. The Δ*fₛ* is a PRACH subcarrier spacing (SCS). The z*_{nifft,a}*[l, n] indicates noise after N-IFFT is performed.

The y*_{pow,a}*[l, n] obtained according to the operation 807 may be configured as in the following equation.${y}_{pow , a} \left[l, n\right] = {\left|{y}_{nifft , a}\left[l, n\right]\right|}^{2} = {γ}^{2} ⋅ {\left|{h}_{a}\left[l\right]\right|}^{2} {\left|{s}_{nifft}\left[n,Δ{f}_{n}\right]\right|}^{2} + {z}_{pow , a} \left[l, n\right]$

In Equation 9, the z_{*pow*,*a*}[l, n] may include all terms except a signal. An average value of the z*_{pow,a}*[l, n] may be configured as in the following equation.$E \left[{z}_{pow , a}\left[l, n\right]\right] = {σ}_{pow , a}^{2} \left[l\right]$

The y*_{noise,a}*[l, n] obtained according to the operation 808 may be configured as in the following equation.${y}_{noise , a} \left[l, n\right] = {y}_{pow , a} \left[l, n\right] / {\hat{σ}}_{pow , a}^{2} \left[l\right] = {γ}^{2} ⋅ \frac{{\left|{h}_{a}\left[l\right]\right|}^{2}}{{\hat{σ}}_{pow , a}^{2} \left[l\right]} {\left|{s}_{nifft}\left[n,Δ{f}_{n}\right]\right|}^{2} + {z}_{noise , a} \left[l, n\right]$

Referring to Equation 11, the ${\hat{σ}}_{pow , a}^{2} \left[l\right]$ indicates a power estimation value of noise. The ${\hat{σ}}_{pow , a}^{2} \left[l\right]$ and the z*_{noise,a}*[l, n] may be configured (approximated or estimated) as in the following equation.${\hat{σ}}_{pow , a}^{2} \left[l\right] ≅ {σ}_{pow , a}^{2} \left[l\right]$$E \left[{z}_{noise , a}\left[l, n\right]\right] ≅ 1$

The y*_{ncoh}*[*n*] obtained according to the operation 809 and the operation 810 may be configured as in the following equation.

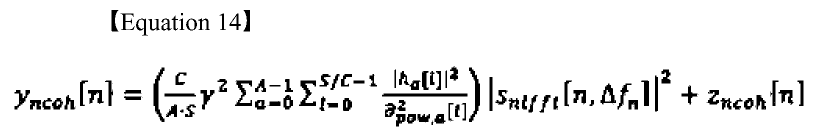

In relation to Equation 14, the *E*[z*_{ncoh}*[n]] may be configured (approximated or estimated) as in the following equation.$E \left[{z}_{ncoh}\left[n\right]\right] ≅ 1$

Referring to Equation 14 and Equation 15, an average value of the y*_{ncoh}*[n] - 1 may be configured as in the following equation.

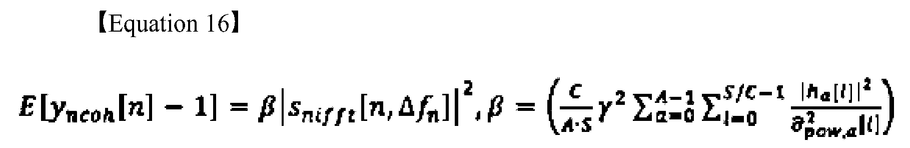

In Equation 16, '-1' of the y*_{ncoh}*[*n*] - 1 may mean removal of a bias due to noise. When there is no process of subtracting 1 from the *y_{ncoh}*[n], as an SNR becomes lower, a ratio of a term related to a noise bias becomes greater, and thus performance for estimation of the frequency offset may deteriorate. In a reception signal (or a random access signal) of a zero correlation zone (ZCZ) v in which a delay is the D(v), the n may be configured as in the following equation. The D(v) may include a cyclic shift and an air delay.$n = mod \left(D\left(v\right)+round\left(αΔm\right),{N}_{IFFT}\right)$

Referring to Equation 17, the |s*_{nifft}*[n, Δ*fₙ*]|² may be approximated as in the following equation.$\begin{matrix}{\left|s\left[Δm,Δ{f}_{n}\right]\right|}^{2} = {\left|{s}_{nifft}\left[mod\left(D\left(v\right)+round\left(αΔm\right),{N}_{IFFT}\right),Δ{f}_{n}\right]\right|}^{2} \\ ≅ {\left|\frac{sin \left(π\left(uΔm-Δ{f}_{n}\right)\right)}{sin \left(π\left(\frac{u Δ m - Δ {f}_{n}}{{N}_{ZC}}\right)\right)}\right|}^{2}\end{matrix}$

Referring to Equation 18, the Δ*m* has an integer value. The *α* may be configured as in Equation 5 described above. Equation 18 may be derived when a ZC sequence is used for a PRACH preamble, such as in an LTE or NR standard. For the above-described equation, the *smod*(*x, N*) may be defined. The *smod*(*x, N*) may be configured as in the following equation.$smod \left(x, N\right) = \left\{\begin{matrix}mod \left(x, N\right) , & 0 \leq mod \left(x, N\right) < \frac{N}{2} \\ mod \left(x, N\right) - N , & otherwise\end{matrix}\right.$

In Equation 19, the *mod*(*x, N*) indicates a modular operation. The *smod*(*x, N*) has a value of $- \frac{N}{2} \leq smod \left(x, N\right) < \frac{N}{2}$*.* In a region where the *smod*(*u*Δ*m* - Δ*fₙ, N_{ZC}*) is much smaller than the *N_{ZC}*, Equation 18 may be approximated as a Sinc function as in the following equation.$\begin{matrix}{\left|s\left[Δm,Δ{f}_{n}\right]\right|}^{2} ≅ {\left|\frac{sin \left(π⋅smod\left(uΔm-Δ{f}_{n},{N}_{ZC}\right)\right)}{π \left(\frac{smod \left(uΔm-Δ{f}_{n},{N}_{ZC}\right)}{{N}_{ZC}}\right)}\right|}^{2} \\ = {N}_{ZC}^{2} {sinc}^{2} \left(smod\left(uΔm-Δ{f}_{n},{N}_{ZC}\right)\right)\end{matrix}$

Referring to Equation 20, when the Δ*fₛ* is 1.25 kHz, the ${\left|s\left[Δm,Δ{f}_{n}\right]\right|}^{2} / {N}_{ZC}^{2}$ according to the Δ*f* in a region of Δ*m* = *-2q, -*1*q,* 0,1*q,* 2*q* may be configured as shown in the graphs of FIG. 10.

Referring to FIG. 10, a graph 1001 indicates the ${\left|s\left[Δm,Δ{f}_{n}\right]\right|}^{2} / {N}_{ZC}^{2}$ according to the Δ*f* when the Δ*m* is 0. A graph 1002 indicates the ${\left|s\left[Δm,Δ{f}_{n}\right]\right|}^{2} / {N}_{ZC}^{2}$ according to the Δ*f* when the Δ*m* is q. A graph 1003 indicates the ${\left|s\left[Δm,Δ{f}_{n}\right]\right|}^{2} / {N}_{ZC}^{2}$ according to the Δ*f* when the Δ*m* is -q. A graph 1004 indicates the ${\left|s\left[Δm,Δ{f}_{n}\right]\right|}^{2} / {N}_{ZC}^{2}$ according to the Δ*f* when the Δ*m* is 2q. A graph 1005 indicates the ${\left|s\left[Δm,Δ{f}_{n}\right]\right|}^{2} / {N}_{ZC}^{2}$ according to the Δ*f* when the Δ*m* is -2q.

Referring to the graph 1001 to the graph 1005, at two Δ*m* in which the |*s*[Δ*m,* Δ*fₙ*]|² value is the greatest, the *smod*(*u*Δ*m* - Δ*fₙ, N_{ZC}*) may be closest to 0.

Referring again to FIG. 9, at the two Δ*m* in which the |*s*[Δ*m,* Δ*fₙ*]|² value is the greatest may be configured as in the following equation using a frequency offset zone index *N_{f} = floor*(Δ*fₙ*)*.*$smod \left(uΔm,{N}_{ZC}\right) = {N}_{f} , {N}_{f} + 1 , Δ m = {N}_{f} q , \left({N}_{f}+1\right) q$

In Equation 21, the *q* satisfies *mod*(*uq, N_{ZC}*) *=* 1. When the Δ*m* is the *N_{f}q* and the (*N_{f} +* 1)*q,* a ratio x of the |*s*[Δ*m*, Δ*fₙ*]|² may be configured as in the following equation. $\begin{matrix}x = Sratio \left(Δ{f}_{n}\right) & = \frac{{\left|s\left[\left({N}_{f}+1\right)q,Δ{f}_{n}\right]\right|}^{2}}{{\left|s\left[{N}_{f}q,Δ{f}_{n}\right]\right|}^{2}} \\ & = \frac{{sinc}^{2} \left({N}_{f}+1-Δ{f}_{n}\right)}{{sinc}^{2} \left({N}_{f}-Δ{f}_{n}\right)} \\ & = {\left(\frac{\frac{sin \left(π\left({N}_{f}+1-Δ{f}_{n}\right)\right)}{π \left({N}_{f}+1-Δ{f}_{n}\right)}}{\frac{sin \left(π\left({N}_{f}-Δ{f}_{n}\right)\right)}{π \left({N}_{f}-Δ{f}_{n}\right)}}\right)}^{2} \\ & = {\left(\frac{π \left({N}_{f}-Δ{f}_{n}\right) sin \left(π\left({N}_{f}+1-Δ{f}_{n}\right)\right)}{π \left({N}_{f}+1-Δ{f}_{n}\right) sin \left(π\left({N}_{f}-Δ{f}_{n}\right)\right)}\right)}^{2} \\ & = {\left(\frac{π \left({N}_{f}-Δ{f}_{n}\right) \left(-sin\left(π\left({N}_{f}-Δ{f}_{n}\right)\right)\right)}{π \left({N}_{f}+1-Δ{f}_{n}\right) sin \left(π\left({N}_{f}-Δ{f}_{n}\right)\right)}\right)}^{2} \\ & = {\left(\frac{Δ {f}_{n} - {N}_{f}}{1 - \left(Δ{f}_{n}-{N}_{f}\right)}\right)}^{2}\end{matrix}$

In Equation 22, when the x (i.e., *Statio*(Δ*fₙ*)) is set as an input and the Δ*f* is set as an output, Equation 22 may be configured as in the following equation.$Δ {f}_{n} - {N}_{f} = \frac{\sqrt{x}}{1 + \sqrt{x}}$$Δ f = \left(\frac{\sqrt{x}}{1 + \sqrt{x}}+{N}_{f}\right) Δ {f}_{s}$

Referring to Equation 23 and Equation 24, the Δ*fₙ* may be set to the *N_{f}* ≤ Δ*fₙ < N_{f} +* 1. Based on Equation 15 and Equation 22 described above, a frequency offset estimator 814 may be configured. For example, the frequency offset estimator 814 having an estimation range of the *-*N*ₘₐₓ*Δ*fₛ* ≤ Δ*f* < N*ₘₐₓ*Δ*f* may be configured as follows.

According to an embodiment, the frequency offset estimator 814 of a base station 110 may include a frequency offset estimator (FOE) energy calculator 901, the maximum value identifier 902, a frequency offset zone index *N_{f}* calculator 903, and/or a frequency offset calculator 904.

The FOE energy calculator 901 may obtain FOE energy for estimating a frequency offset by using the delay D̂(v) estimated by the profiler 812 of FIG. 8 and the y*_{ncoh}*[n] obtained according to the operation 810 of FIG. 8. In order to obtain the FOE energy, the D(v) may be identified (or approximated, estimated) as D(v) (D(v) ≅ D(v)). The FOE energy seng[w] may be configured as in the following equation.$seng \left[w\right] = {y}_{ncoh} \left[mod\left(\hat{D}\left(v\right)+round\left(αΔm\right),{N}_{IFFT}\right)\right] - 1$$seng \left[w\right] ≅ β {\left|s\left[Δm,Δ{f}_{n}\right]\right|}^{2}$

Referring to Equations 25 and 26, the FOE energy seng[w] may be identified (or approximated, estimated) as the β|*s*[Δ*m,* Δ*fₙ*]|². The β may be the β of Equation 16. The Δ*m* may be set to *w ·* q(Δ*m* = *w* · q). The w may be set to *-*N*ₘₐₓ, -*N*ₘₐₓ* + 1 ..., N*ₘₐₓ*(w *=* -N*ₘₐₓ*, -N*ₘₐₓ* + 1 ... , N*ₘₐₓ*). The *α* may be set as in Equation 5 ( $α = \frac{{N}_{IFFT}}{{N}_{ZC}}$).

The D̂(v) is a delay having the maximum power in a ZCZ (v, *v* = 0*~V*(*si*) - 1) of the preamble sequence si. The *V*(*si*) is the number of ZCZs of the preamble sequence si.

The maximum value identifier 902 may identify (or select) an index *wₘₐₓ* having the maximum value among (2N*ₘₐₓ* + 1) FOE energies. The maximum value identifier 902 may identify the *wₘₐₓ* in which the seng[w] is maximum, based on Equation 25.

The frequency offset zone index *N_{f}* calculator 903 may identify (or calculate) the frequency offset zone index *N_{f}* by using the *wₘₐₓ* and the *seng*[*wₘₐₓ* ± 1]. For example, the frequency offset zone index *N_{f}* calculator 903 may identify (or calculate the frequency offset zone index *N_{f}* by using the *wₘₐₓ* ± 1 (or the seng[*wₘₐₓ* ± 1] ) adjacent to the *wₘₐₓ* (or the seng[*wₘₐₓ*]).

For example, the frequency offset zone index *N_{f}* calculator 903 may identify the seng[*wₘₐₓ* + 1] and the seng[*wₘₐₓ* - 1]. The frequency offset zone index *N_{f}* calculator 903 may identify a greater value among the seng[*wₘₐₓ* + 1] and the seng[*wₘₐₓ* - 1]. Based on the greater value among the seng[*wₘₐₓ* + 1] and the seng[*wₘₐₓ* - 1], the frequency offset zone index *N_{f}* may be determined. For example, when the *seng*[*wₘₐₓ* + 1] is greater than the seng[*wₘₐₓ* - 1], the *N_{f}* may be identified as the *wₘₐₓ.* For example, when the seng[*wₘₐₓ* - 1] is greater than the seng[*wₘₐₓ* + 1], the *N_{f}* may be identified as the *wₘₐₓ -* 1.

For example, the frequency offset zone index *N_{f}* may be identified as in the following equation. ${N}_{f} = \left\{\begin{matrix}- {N}_{max} , if {w}_{max} = = - {N}_{max} \\ {N}_{max} - 1 , if {w}_{max} = = {N}_{max} \\ {w}_{max} , if \left(seng\left[{w}_{max}+1\right]\geq seng\left[{w}_{max}-1\right]\right) and {w}_{max} \neq \pm {N}_{max} \\ {w}_{max} - 1 , if \left(seng\left[{w}_{max}+1\right]<seng\left[{w}_{max}-1\right]\right) and {w}_{max} \neq \pm {N}_{max}\end{matrix}\right.$

The frequency offset calculator 904 may identify (or calculate) the frequency offset Δ*f* by using the *N_{f},* the seng[*N_{f}*], and the seng[*N_{f}* + 1]. For example, the frequency offset calculator 904 may identify (or calculate) the frequency offset Δ*f* by using the following equation.$Δ f = \left(\frac{\sqrt{x}}{1 + \sqrt{x}}+{N}_{f}\right) Δ {f}_{s}$$x = \frac{seng \left[{N}_{f}+1\right]}{seng \left[{N}_{f}\right]} ≅ \frac{{\left|s\left(\left({N}_{f}+1\right)q,Δ{f}_{n}\right)\right|}^{2}}{{\left|s\left({N}_{f}q,Δ{f}_{n}\right)\right|}^{2}}$

Referring to Equation 28 and Equation 29, the frequency offset estimator 814 may estimate the frequency offset Δ*f* by using the x (i.e., *Sratio*(Δ*fₙ*))*.*

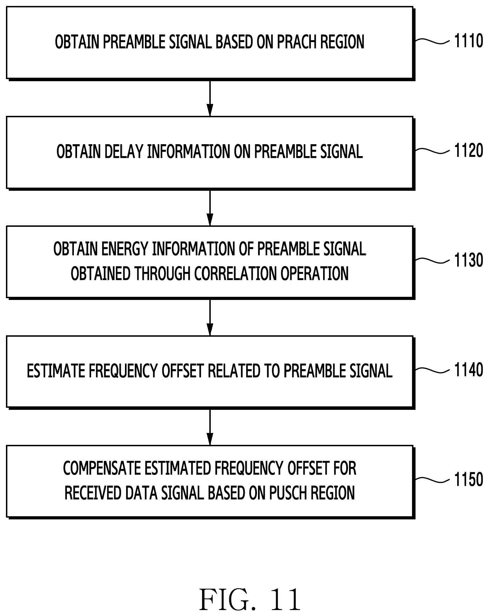

FIG. 11 illustrates a flowchart related to an operation of an electronic device.

Referring to FIG. 11, an electronic device (or a processor of the electronic device) may be included in a base station 110. For example, the electronic device may be configured to receive a signal (e.g., a preamble signal or a data signal) transmitted from a terminal. According to an embodiment, the base station 110 may be divided into a DU 210 and an RU 220. The DU 210 may perform at least a portion of operation 1110 to operation 1150. The RU 220 may perform a remaining portion of the operation 1110 to the operation 1150. For example, the RU 220 may obtain a preamble signal (or a random access signal) by using a plurality of antennas. The RU 220 may transmit the preamble signal to the DU 210. The DU 210 may perform the following operation 1110 to operation 1150 based on obtaining the preamble signal from the RU 220.

In operation 1110, the electronic device may obtain a preamble signal based on a PRACH region. For example, the electronic device may obtain, based on the PRACH region, a preamble signal related to signals received through a plurality of antennas. For example, the preamble signal may include the random access signal 710 of FIG. 7.

For example, the preamble signal may include a cyclic prefix and a plurality of preamble symbols. The plurality of preamble symbols may be configured based on a Zadoff Chu (ZC) sequence.

In operation 1120, the electronic device may obtain delay information on the preamble signal. For example, an example of the delay information is the above-described D(v). The obtained delay information may include a delay value generated according to a cyclic shift and an air delay.

In operation 1130, the electronic device may obtain energy information of the preamble signal obtained through a correlation operation. For example, the electronic device may perform the correlation operation on the preamble signal. An operation of performing the correlation operation on the preamble signal may be related to the operation 805 of FIG. 8. For example, the electronic device may obtain the energy information on the preamble signal obtained through the correlation operation. The energy information on the preamble signal may be obtained according to the operation 810 of FIG. 8 (or Equation 14).

In operation 1140, the electronic device may estimate a frequency offset related to the preamble signal. For example, the electronic device may estimate, based on the delay information and the energy information, the frequency offset related to the preamble signal.

For example, the electronic device may determine, based on the delay information and the energy information, a reference frequency range. The reference frequency range may be divided into a plurality of frequency indices. The electronic device may estimate the frequency offset based on an energy value with respect to each of the plurality of frequency indices. An example of the plurality of frequency indices is the w of Equation 25 or Equation 26. The energy value according to a frequency index is the seng[w] of Equation 25 or Equation 26. In Equation 26, the energy value according to the frequency index may be represented as β|*s*[Δ*m,* Δ*fₙ*]|².

As an example, the plurality of frequency indices may be determined based on a type of the preamble signal. The type of the preamble signal may be one of 'unrestricted', 'restricted type A' (or 'type A'), and 'restricted type B' (or 'type B'). According to the type of the preamble signal, the plurality of frequency indices may be determined.

According to an embodiment, the electronic device may determine a frequency index with the maximum energy value among the frequency indices. An example of the frequency index with the maximum energy value is the above-described wₘₐₓ. The electronic device may determine the determined frequency index as a reference frequency index.

The electronic device may identify a first frequency index and a second frequency index related to the reference frequency index. The first frequency index may be smaller than the reference frequency index by a designated index value (e.g., '1'). The second frequency index may be larger than the reference frequency index by the designated index value. The electronic device may determine another reference frequency index according to comparison of an energy value of the first frequency index and an energy value of the second frequency index.

For example, when the energy value of the first frequency index is greater than or equal to the energy value of the second frequency index, the first frequency index may be determined as the another reference frequency index. In this case, an example of the another reference frequency index is N_{f}. An example of the reference frequency index is N_{f}+1.

For example, when the energy value of the first frequency index is smaller than the energy value of the second frequency index, the second frequency index may be determined as the another reference frequency index. In this case, an example of the reference frequency index is N_{f}. An example of the another reference frequency index is N_{f}+1.

According to an embodiment, the electronic device may determine two frequency indices having the largest energy values among the frequency indices. A smaller value among the two frequency indices may be determined as the reference frequency (or N_{f}). A greater value among the two frequency indices may be determined as the another reference frequency (or N_{f}+1).

According to an embodiment, the electronic device may estimate the frequency offset of the preamble signal based on a ratio between an energy value of the reference frequency index and an energy value of the another reference frequency index. The electronic device may estimate the frequency offset using the ratio, the reference frequency index, and a subcarrier spacing of the preamble signal. The electronic device may estimate the frequency offset through the above-described Equation 28.

In operation 1150, the electronic device may compensate the estimated frequency offset for a data signal received based on a PUSCH region. The electronic device may estimate the frequency offset through the preamble signal obtained based on the PRACH region, and may apply the estimated frequency offset to the data signal received based on the PUSCH region. For example, the electronic device may compensate an approximate frequency offset for the data signal through the preamble signal. The electronic device may estimate an accurate frequency offset based on the data signal (or a reference signal of the data signal). The electronic device may obtain data by compensating the accurate frequency offset for the data signal. As the electronic device compensates the approximate frequency offset in advance for the data signal, implementation complexity for receiving the data signal may be reduced.

According to an embodiment, an electronic device may comprise a transceiver, at least one processor comprising processing circuitry, and memory, comprising one or more storage mediums, storing instructions. The instructions, when executed by the at least one processor individually or collectively, may cause the electronic device to obtain, based on a physical random access channel (PRACH) region, a preamble signal related to signals received through a plurality of antennas. The instructions, when executed by the at least one processor individually or collectively, may cause the electronic device to obtain delay information on the preamble signal. The instructions, when executed by the at least one processor individually or collectively, may cause the electronic device to obtain energy information on the preamble signal obtained through a correlation operation. The instructions, when executed by the at least one processor individually or collectively, may cause the electronic device to estimate, based on the delay information and the energy information, a frequency offset related to the preamble signal. The instructions, when executed by the at least one processor individually or collectively, may cause the electronic device to compensate the estimated frequency offset for a data signal received based on a physical uplink shared channel (PUSCH) region.

According to an embodiment, the instructions, when executed by the at least one processor individually or collectively, may cause the electronic device to determine, based on the delay information and the energy information, a reference frequency range. The instructions, when executed by the at least one processor individually or collectively, may cause the electronic device to estimate, based on an energy value with respect to each of a plurality of frequency indices in the reference frequency range, the frequency offset.

According to an embodiment, the instructions, when executed by the at least one processor individually or collectively, may cause the electronic device to determine a frequency index with the maximum energy value among the plurality of frequency indexes. The instructions, when executed by the at least one processor individually or collectively, may cause the electronic device to determine the determined frequency index as a reference frequency index.

According to an embodiment, the plurality of frequency indices may be determined based on a type of the preamble signal.

According to an embodiment, the instructions, when executed by the at least one processor individually or collectively, may cause the electronic device to identify a first frequency index and a second frequency index related to the reference frequency index. The instructions, when executed by the at least one processor individually or collectively, may cause the electronic device to determine another reference frequency index according to comparison of an energy value of the first frequency index and an energy value of the second frequency index.

According to an embodiment, the instructions, when executed by the at least one processor individually or collectively, may cause the electronic device to estimate, based on a ratio between an energy value of the reference frequency index and an energy value of the another reference frequency index, the frequency offset.

According to an embodiment, the instructions, when executed by the at least one processor individually or collectively, may cause the electronic device to estimate the frequency offset using the ratio, the reference frequency index, and a subcarrier spacing of the preamble signal.

According to an embodiment, the preamble signal and the data signal may be transmitted from a terminal.

According to an embodiment, the preamble signal may comprise a cyclic prefix and a plurality of preamble symbols.

According to an embodiment, the plurality of preamble symbols may be configured based on a Zadoff Chu (ZC) sequence.

According to an embodiment, a method performed by an electronic device may comprise obtaining, based on a physical random access channel (PRACH) region, a preamble signal related to signals received through a plurality of antennas. The method may comprise obtaining delay information on the preamble signal. The method may comprise obtaining energy information on the preamble signal obtained through a correlation operation. The method may comprise estimating, based on the delay information and the energy information, a frequency offset related to the preamble signal. The method may comprise compensating the estimated frequency offset for a data signal received based on a physical uplink shared channel (PUSCH) region.

According to an embodiment, the method may comprise determining, based on the delay information and the energy information, a reference frequency range. The method may comprise estimating, based on an energy value with respect to each of a plurality of frequency indices in the reference frequency range, the frequency offset.

According to an embodiment, the method may comprise determining a frequency index with the maximum energy value among the plurality of frequency indexes. The method may comprise determining the determined frequency index as a reference frequency index.

According to an embodiment, the plurality of frequency indices may be determined based on a type of the preamble signal.

According to an embodiment, the method may comprise identifying a first frequency index and a second frequency index related to the reference frequency index. The method may comprise determining another reference frequency index according to comparison of an energy value of the first frequency index and an energy value of the second frequency index.

According to an embodiment, the method may comprise estimating, based on a ratio between an energy value of the reference frequency index and an energy value of the another reference frequency index, the frequency offset.

According to an embodiment, the method may comprise estimating the frequency offset using the ratio, the reference frequency index, and a subcarrier spacing of the preamble signal.

According to an embodiment, the preamble signal and the data signal may be transmitted from a terminal.

According to an embodiment, the preamble signal may comprise a cyclic prefix and a plurality of preamble symbols.

According to an embodiment, a non-transitory computer readable storage medium may store one or more programs. The one or more programs may comprise instructions, which, when executed by a processor of an electronic device, cause the electronic device to obtain, based on a physical random access channel (PRACH) region, a preamble signal related to signals received through a plurality of antennas. The one or more programs may comprise instructions, which, when executed by the processor, cause the electronic device to obtain delay information on the preamble signal. The one or more programs may comprise instructions, which, when executed by the processor, cause the electronic device to obtain energy information on the preamble signal obtained through a correlation operation. The one or more programs may comprise instructions, which, when executed by the processor, cause the electronic device to estimate, based on the delay information and the energy information, a frequency offset related to the preamble signal. The one or more programs may comprise instructions, which, when executed by the processor, cause the electronic device to compensate the estimated frequency offset for a data signal received based on a physical uplink shared channel (PUSCH) region.

According to the above-described embodiment, when a preamble signal configured based on a ZC sequence is received, a frequency offset may be estimated (or measured). When receiving the ZC sequence, the electronic device may estimate the frequency offset based on a characteristic of the ZC sequence according to the frequency offset. The electronic device may estimate and compensate a frequency offset having an error of several hundred Hz or less through the preamble signal. The electronic device may compensate, in advance, a data signal related to a PUSCH according to the estimated frequency offset, and may compensate an accurate frequency offset. Therefore, reception complexity of the PUSCH may be reduced, and performance may be improved.

Methods according to embodiments described in claims or specifications of the present disclosure may be implemented as a form of hardware, software, or a combination of hardware and software.

In a case of implementing as software, a computer-readable storage medium for storing one or more programs (software module) may be provided. The one or more programs stored in the computer-readable storage medium are configured for execution by one or more processors in an electronic device. The one or more programs include instructions that cause the electronic device to execute the methods according to embodiments described in claims or specifications of the present disclosure.

Such a program (software module, software) may be stored in a random access memory, a non-volatile memory including a flash memory, a read only memory (ROM), an electrically erasable programmable read only memory (EEPROM), a magnetic disc storage device, an optical storage device (e.g., a compact disc-ROM (CD-ROM), digital versatile discs (DVDs), or other formats), or a magnetic cassette. Alternatively, it may be stored in memory configured with a combination of some or all of them. In addition, a plurality of configuration memories may be included.

Additionally, a program may be stored in an attachable storage device that may be accessed through a communication network such as the Internet, Intranet, local area network (LAN), wide area network (WAN), or storage area network (SAN), or a combination thereof. Such a storage device may be connected to a device performing an embodiment of the present disclosure through an external port. In addition, a separate storage device on the communication network may also be connected to a device performing an embodiment of the present disclosure.

In the above-described specific embodiments of the present disclosure, components included in the disclosure are expressed in the singular or plural according to the presented specific embodiment. However, the singular or plural expression is selected appropriately according to a situation presented for convenience of explanation, and the present disclosure is not limited to the singular or plural component, and even components expressed in the plural may be configured in the singular, or a component expressed in the singular may be configured in the plural.

Meanwhile, specific embodiments have been described in the detailed description of the present disclosure, and of course, various modifications are possible without departing from the scope of the present disclosure.

## Claims

1. An electronic device comprising:
a transceiver;
at least one processor comprising processing circuitry; and
memory, comprising one or more storage mediums, storing instructions,
wherein the instructions, when executed by the at least one processor individually or collectively, cause the electronic device to:
obtain, based on a physical random access channel (PRACH) region, a preamble signal related to signals received through a plurality of antennas,
obtain delay information on the preamble signal,
obtain energy information on the preamble signal obtained through a correlation operation,
estimate, based on the delay information and the energy information, a frequency offset related to the preamble signal, and
compensate the estimated frequency offset for a data signal received based on a physical uplink shared channel (PUSCH) region.

2. The electronic device of claim 1, wherein the instructions, when executed by the at least one processor individually or collectively, cause the electronic device to:
determine, based on the delay information and the energy information, a reference frequency range, and
estimate, based on an energy value with respect to each of a plurality of frequency indices in the reference frequency range, the frequency offset.

3. The electronic device of claim 2, wherein the instructions, when executed by the at least one processor individually or collectively, further cause the electronic device to:
determine a frequency index with the maximum energy value among the plurality of frequency indexes, and
determine the determined frequency index as a reference frequency index.

4. The electronic device of claim 3, wherein the plurality of frequency indices are determined based on a type of the preamble signal.

5. The electronic device of claim 3, wherein the instructions, when executed by the at least one processor individually or collectively, further cause the electronic device to:
identify a first frequency index and a second frequency index related to the reference frequency index, and
determine another reference frequency index according to comparison of an energy value of the first frequency index and an energy value of the second frequency index,

6. The electronic device of claim 5, wherein the instructions, when executed by the at least one processor individually or collectively, further cause the electronic device to estimate, based on a ratio between an energy value of the reference frequency index and an energy value of the another reference frequency index, the frequency offset.

7. The electronic device of claim 6, wherein the instructions, when executed by the at least one processor individually or collectively, further cause the electronic device to estimate the frequency offset using the ratio, the reference frequency index, and a subcarrier spacing of the preamble signal.

8. The electronic device of claim 1, wherein the preamble signal and the data signal are transmitted from a terminal.

9. The electronic device of claim 1, wherein the preamble signal comprises a cyclic prefix and a plurality of preamble symbols.

10. The electronic device of claim 9, wherein the plurality of preamble symbols are configured based on a Zadoff Chu (ZC) sequence.

11. A method performed by an electronic device, comprising:
obtaining, based on a physical random access channel (PRACH) region, a preamble signal related to signals received through a plurality of antennas,
obtaining delay information on the preamble signal,
obtaining energy information on the preamble signal obtained through a correlation operation,
estimating, based on the delay information and the energy information, a frequency offset related to the preamble signal, and
compensating the estimated frequency offset for a data signal received based on a physical uplink shared channel (PUSCH) region.

12. The method of claim 11, wherein the method further comprises:
determining, based on the delay information and the energy information, a reference frequency range, and
estimating, based on an energy value with respect to each of a plurality of frequency indices in the reference frequency range, the frequency offset.

13. The method of claim 12, wherein the method further comprises:
determining a frequency index with the maximum energy value among the plurality of frequency indexes, and
determining the determined frequency index as a reference frequency index.

14. The method of claim 13, wherein the plurality of frequency indices are determined based on a type of the preamble signal.

15. A non-transitory computer readable storage medium storing one or more programs, the one or more programs comprising instructions, which, when executed by a processor of an electronic device, cause the electronic device to:
obtain, based on a physical random access channel (PRACH) region, a preamble signal related to signals received through a plurality of antennas,
obtain delay information on the preamble signal,
obtain energy information on the preamble signal obtained through a correlation operation,
estimate, based on the delay information and the energy information, a frequency offset related to the preamble signal, and
compensate the estimated frequency offset for a data signal received based on a physical uplink shared channel (PUSCH) region.
